(19) Europäisches Patentamt
European Patent Office
Office européen des brevets

(11) **EP 4 560 162 A1**

(12) **EUROPEAN PATENT APPLICATION**
published in accordance with Art. 153(4) EPC

(43) Date of publication:
**28.05.2025 Bulletin 2025/22**

(21) Application number: **23842812.2**

(22) Date of filing: **03.07.2023**

(51) International Patent Classification (IPC):
*F16D 48/06* (2006.01)      *F16H 59/14* (2006.01)
*F16H 59/42* (2006.01)      *F16H 61/04* (2006.01)

(52) Cooperative Patent Classification (CPC):
**F16D 48/06; F16H 59/14; F16H 59/42; F16H 61/04**

(86) International application number:
**PCT/JP2023/024671**

(87) International publication number:
**WO 2024/018887 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022 JP 2022115260**

(71) Applicant: **NSK Ltd.**
**Tokyo 141-8560 (JP)**

(72) Inventors:
• **YAMAMOTO, Akihiro**
**Fujisawa-shi, Kanagawa 251-8501 (JP)**
• **KIMURA, Shingo**
**Fujisawa-shi, Kanagawa 251-8501 (JP)**

(74) Representative: **Müller-Boré & Partner
Patentanwälte PartG mbB
Friedenheimer Brücke 21
80639 München (DE)**

(54) **TWO-SPEED TRANSMISSION, METHOD OF LEARNING μ-V CHARACTERISTICS OF SAID TWO-SPEED TRANSMISSION, AND METHOD OF CONTROLLING GEARSHIFT BY SAID TWO-SPEED TRANSMISSION**

(57)      [Problem] To prevent the occurrence of shift shock in a two-speed transmission capable of switching the reduction ratio into the two stages of high and low.

[Solution] A two-speed transmission 1 includes a learning function performing mode switching between a first mode and a second mode on a condition that a predetermined learning start condition is satisfied, and, in an inertia phase during the mode switching, calculating a friction coefficient μ between a first friction plate 30 and a second friction plate 31 based on output torque of a drive motor 2 and angular acceleration of an output shaft 11 of the drive motor 2, and obtaining a μ-V characteristic that is a relationship between the friction coefficient μ and a differential rotation V that is a difference in the rotational speed of any two elements of a planetary transmission mechanism 9.

FIG. 1

OTHER SIDE IN THE AXIAL DIRECTION      ONE SIDE IN THE AXIAL DIRECTION

EP 4 560 162 A1

**Description**

**TECHNICAL FIELD**

The present disclosure relates to a two-speed transmission for switching a reduction ratio between an input member and an output member into two stages of high and low, a method for learning a $\mu$-V characteristic of the two-speed transmission, and a transmission control method for the two-speed transmission.

**BACKGROUND ART**

In response to a recent trend towards reducing fossil fuel consumption, research into electric automobiles and hybrid automobiles has progressed and some have already been implemented. Electric motors that are a power source for electric automobiles and hybrid automobiles differ from internal combustion engines that are powered by directly burning fossil fuels in that the torque and rotational speed characteristics of the output shaft are favorable for automotive use. In other words, electric motors generally generate maximum torque at start-up, so there is no need to provide a transmission as in a case of general automobiles that are driven by internal combustion engines.

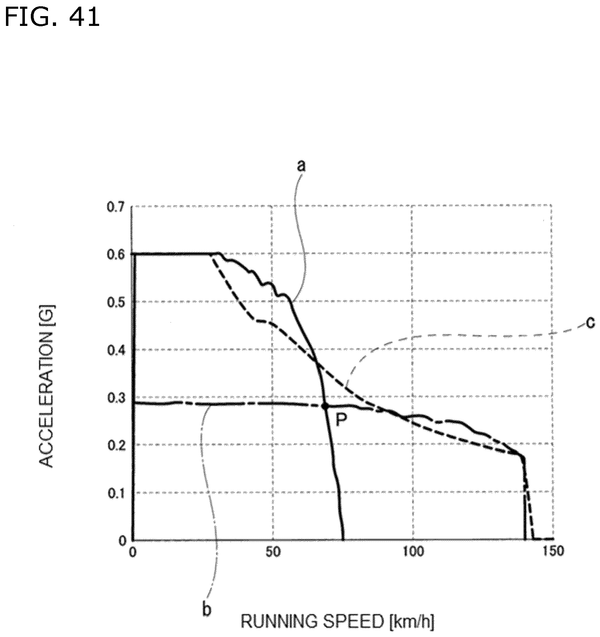

However, even in a case in which an electric motor is used as a drive source, the acceleration performance and high-speed performance can be improved by providing a transmission. More specifically, by providing a transmission, the relationship between the automobile's running speed and acceleration can be made smoother, similar to that of an automobile equipped with a gasoline engine and a transmission in the power transmission system. This point will be described with reference to FIG. 41.

For example, when a power transmission device with a large reduction ratio is arranged between an output shaft of an electric motor and an input portion of a differential gear connected to drive wheels, the relationship between acceleration (G) and running speed (km/h) of the electric automobile will be as illustrated by solid line a in FIG. 41. In other words, the acceleration performance at low speeds is excellent, but high speed driving is not possible. On the other hand, when a power transmission device with a small reduction ratio is arranged between the output shaft and the input portion, the relationship will be as illustrated by chain line b in FIG. 41. In other words, high-speed driving becomes possible; however, acceleration performance at low speeds is impaired.

On the other hand, when a transmission is provided between the output shaft and the input portion and the reduction ratio of this transmission is changed according to the automobile speed, a characteristic can be obtained in which a left side portion farther on the left side than a point P on the solid line a is continuous with a right side portion farther on the right side than the point P on the chain line b. This characteristic is roughly equivalent to that of a gasoline engine automobile having a similar output, as illustrated by a dashed line c in FIG. 41, and it can be seen that in terms of acceleration performance and high-speed performance, it is possible to obtain performance equivalent to that of a gasoline engine automobile having a transmission in the power transmission system.

JP H05-116549 A discloses a structure of an electric automobile drive device in which torque of an output shaft of an electric motor is increased by a two-speed transmission including a pair of planetary gear mechanisms and a pair of brakes, and then transmitted to a differential gear. In this electric automobile drive device, by switching between a connected state and a disconnected state of the pair of brakes, the components of the pair of planetary gear mechanisms are switched between a rotatable state and a non-rotatable state, making it possible to switch the reduction ratio between the output shaft of the electric motor and the differential gear between two stages of high and low.

**CITATION LIST**

**PATENT LITERATURE**

Patent Literature 1: JP H05-116549 A

**SUMMARY OF INVENTION**

**TECHNICAL PROBLEM**

In automobiles, including electric automobiles, in order to ensure ride comfort and other performance, it is important to prevent the occurrence of shock (shift shock) that occurs when switching reduction ratios. In the electric automobile drive device described in JP H05-116549 A, by appropriately controlling timing at which a pair of brakes are switched between a connected state and a disconnected state, controlling output torque and rotational speed of a motor that serves as a drive source, and adjusting torque transmitted to each brake, it is possible to switch the reduction ratio while keeping the rotational torque of the output shaft constant, thereby preventing the occurrence of shift shock.

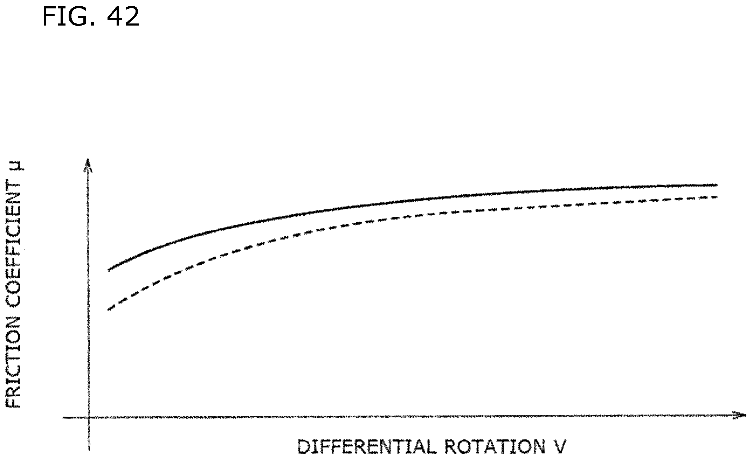

Here, the torque transmitted to the brake can be calculated based on the relative rotational speed between the friction engagement elements, or in other words, the dependency of the friction coefficient with respect to the slip speed ($\mu$-V characteristic), and the force pressing the friction engagement elements together. The friction coefficient between the friction engagement elements of the brake changes with changes in the usage environment and deterioration over time, and this causes the $\mu$-V characteristic to change as illustrated by the solid line to the dashed line in FIG. 42. Therefore, when the $\mu$-V characteristic changes due to deterioration over time or due to changes in the external environment, it may become impossible to accurately estimate the torque transmitted to the brake when switching the reduction ratio, which may result in shift shock.

In view of the circumstances described above, an object according to the present disclosure is to achieve a structure capable of learning the $\mu$-V characteristic that changes with use in a two-speed transmission capable of switching the reduction ratio between two stages of high and low, and thereby making it possible to prevent the occurrence of shift shock regardless of changes in the usage environment or deterioration over time.

**SOLUTION TO PROBLEM**

An aspect of the present disclosure relates to a two-speed transmission. A two-speed transmission according to an aspect of the present disclosure includes a planetary transmission mechanism, an input member, an output member, a drive motor, a rotation transmission state switching device, and a friction engagement device.

The planetary transmission mechanism includes an input element connected to the input member, an output element connected to the output member and capable of rotating relative to the input element, and a rotating element capable of rotating relative to the input element and the output element.

The planetary transmission mechanism has a sun element, a ring element supported around the sun element so as to be capable of relative rotation with respect to the sun element, a carrier element supported so as to be capable of relative rotation with respect to the sun element and the ring element, and a plurality of planetary elements engaged with the sun element and the ring element so as to be capable of transmitting torque, the plurality of planetary elements rotatably supported by the carrier element.

The input element is configured by one of the sun element, the ring element, and the carrier element.

The output element is configured by one of the sun element, the ring element, and the carrier element, that is an element other than that of the input element.

The rotating element is configured by a remaining element of the sun element, the ring element, and the carrier element, excluding those of the input element and the output element.

The drive motor rotates and drives the input member directly or through a reducer.

The rotation transmission state switching device is arranged between the rotating element and a fixed portion that does not rotate even during use, and switches between a free mode in which the rotating element is capable of rotating relative to the fixed portion and a locked mode in which the rotating element is not capable of rotating relative to the fixed portion.

The friction engagement device has at least one first friction plate and at least one second friction plate supported to allow relative displacement in an axial direction, and is arranged between any two elements of the sun element, the ring element, and the carrier element, and switches to a connected mode in which the any two elements rotate integrally by pressing the first friction plate and the second friction plate against each other, and switches to a disconnected mode in which the any two elements rotate relative to each other by releasing a force pressing the first friction plate and the second friction plate against each other.

The two-speed transmission includes a first mode in which the rotation transmission state switching device is in the free mode and the friction engagement device is in the connected mode, and a second mode in which the rotation transmission state switching device is in the locked mode and the friction engagement device is in the disconnected mode.

The two-speed transmission includes a learning function that, by performing mode switching between the first mode and the second mode on a condition that a predetermined learning start condition is satisfied, and calculating a friction coefficient between the first friction plate and the second friction plate based on output torque of the drive motor and angular acceleration of an output shaft of the drive motor in an inertia phase during the mode switching, obtains a $\mu$-V characteristic that is a relationship between the friction coefficient and a differential rotation that is a difference in the rotational speed of the any two elements.

In the two-speed transmission of an aspect of the present disclosure, when executing the learning function, rotational speed of the output shaft of the drive motor is kept constant, and after mode switching between the first mode and the second mode is started, it may be determined that the inertia phase has started on a condition that an amount of change per unit time of the differential rotation exceeds a predetermined threshold value.

The two-speed transmission of an aspect of the present disclosure may include a control function that controls output torque of the drive motor and magnitude of the force pressing the first friction plate and the second friction plate against each other based on the $\mu$-V characteristic obtained by the learning function when switching between the first mode and the second mode.

In the two-speed transmission of an aspect of the present disclosure, the friction engagement device may include an elastic biasing member, a cam device, and an electric actuator.

The elastic biasing member elastically biases the first friction plate and the second friction plate in a direction so as to be pressed against each other.

The cam device has a drive cam and a driven cam supported so as to be capable of rotating relative to the drive cam and capable of relative displacement in the axial direction. As the drive cam rotates, the cam device relatively displaces the driven cam in a direction that increases a distance in the axial direction between the drive cam and the driven cam, and thereby presses the elastic biasing member in a direction that releases the force pressing the first friction plate and the second friction plate against each other.

The electric actuator has a shift motor and a shift reducer, and rotates and drives the drive cam by the shift motor through the shift reducer.

In the two-speed transmission of an aspect of the present disclosure, the friction engagement device may include a return spring that elastically biases the first friction plate and the second friction plate in directions away from each other.

In the two-speed transmission of an aspect of the present disclosure, the rotation transmission state switching device may have a one-way clutch mode in which rotation of the rotating element relative to the fixed portion is allowed only in a predetermined direction, and rotation of the rotating element relative to the fixed portion in a direction opposite to the predetermined direction is prevented.

In this case, the two-speed transmission may include a function of setting the rotation transmission state switching device to the one-way clutch mode while the friction engagement device is being switched from the disconnected mode to the connected mode and/or while the friction engagement device is being switched from the connected mode to the disconnected mode.

An aspect of the present disclosure relates to a method for learning a $\mu$-V characteristic, which, in the two-speed transmission, is the relationship between a friction coefficient between the first friction plate and the second friction plate and a differential rotation, which is the difference in rotational speed between the any two elements. The method for learning the $\mu$-V characteristic of the two-speed transmission, by performing mode switching between the first mode and the second mode on a condition that a predetermined learning start condition is satisfied, and, in an inertia phase during the mode switching, calculating a friction coefficient based on output torque of the drive motor and angular acceleration of the output shaft of the drive motor, obtains the $\mu$-V characteristic.

An aspect of the present disclosure relates to a transmission control method for the two-speed transmission. The transmission control method includes:

a learning step of obtaining the $\mu$-V characteristic by the $\mu$-V characteristic learning method; and
a step of controlling output torque of the drive motor and magnitude of the force pressing the first friction plate and the second friction plate against each other based on the $\mu$-V characteristic obtained in the learning step when switching between the first mode and the second mode.

The technique according to the present disclosure may be implemented by combining the above-described aspects as appropriate, provided that no contradiction occurs.

### EFFECT OF INVENTION

With the two-speed transmission, the method for learning the $\mu$-V characteristic of the two-speed transmission, and the transmission control method of the two-speed transmission according to an aspect of the present disclosure, it is possible to learn the $\mu$-V characteristic that changes with use, and therefore a two-speed transmission is provided that can prevent the occurrence of shift shock regardless of changes in the usage environment or deterioration over time.

### BRIEF DESCRIPTION OF DRAWINGS

FIG. 1 is a cross-sectional view illustrating a drive system incorporating a two-speed transmission of a first example of an embodiment according to the present disclosure.
FIG. 2A is a diagram illustrating a torque transmission path in a low reduction ratio mode of the two-speed transmission of the first example, and FIG. 2B is a diagram illustrating the torque transmission path in a high reduction ratio mode of the two-speed transmission of the first example.
FIG. 3 is a perspective view of the two-speed transmission of the first example.
FIG. 4 is a cross-sectional view of the two-speed transmission of the first example.

FIG. 5 is a perspective view illustrating the two-speed transmission of the first example with a planetary transmission mechanism removed.

FIG. 6 is a cross-sectional view illustrating the two-speed transmission of the first example with the planetary transmission mechanism removed.

FIG. 7 is an exploded perspective view of the two-speed transmission of the first example.

FIG. 8 is an exploded perspective view illustrating a worm and two support bearings removed from a friction engagement device of the two-speed transmission of the first example.

FIG. 9 is an exploded perspective view illustrating a first friction plate and a second friction plate removed from the friction engagement device.

FIG. 10 is an enlarged view of a portion X in FIG. 4.

FIG. 11 is a perspective view illustrating a drive cam removed from the friction engagement device.

FIG. 12 is an exploded perspective view illustrating a driven cam and rolling elements removed from the friction engagement device.

FIG. 13A is a perspective view illustrating a flange portion and a pressing member of a rotating member that is removed from the two-speed transmission of the first example, and FIG. 13B is an exploded perspective view illustrating the flange portion and the pressing member of the rotating member that is removed from the two-speed transmission.

FIG. 14A to FIG. 14D are schematic diagrams of a cam device of the friction engagement device as viewed from outside in the radial direction.

FIG. 15 is a perspective view of a rotation transmission state switching device of the two-speed transmission of the first example, as viewed from the other side in the axial direction.

FIG. 16 is an exploded perspective view of the rotation transmission state switching device.

FIG. 17 is an end view of the rotation transmission state switching device as seen from the other side in the axial direction with a selection plate removed.

FIG. 18 is an enlarged view of a portion Y in FIG. 17.

FIG. 19A is a schematic diagram illustrating an engagement relationship between a first engagement claw and a second engagement claw, an engagement recessed portion, and a protruding portion in a free mode of the rotation transmission state switching device, FIG. 19B is a schematic diagram illustrating an engagement relationship in a locked mode, and FIG. 19C is a schematic diagram illustrating an engagement relationship in a one-way clutch mode.

FIG. 20 is a diagram illustrating a schematic diagram of the modes of the friction engagement device and the modes of the rotation transmission state switching device in the two-speed transmission of the first example.

FIGS. 21A and 21B are graphs illustrating a relationship between a rotational angle of the drive cam and output torque and current value of a shift motor when the friction engagement device is switched from a connected mode to a disconnected mode, with FIG. 21A illustrating a case in which the first friction plate and the second friction plate are new and not worn, and FIG. 21B illustrating a case in which the first friction plate and the second friction plate have been significantly worn.

FIG. 22 is a cross-sectional view illustrating a state in which the friction engagement device is switched to the connected mode.

FIG. 23 is a cross-sectional view illustrating a state in which a pressing member and a piston are in contact with each other during switching of the friction engagement device from the connected mode to the disconnected mode.

FIG. 24 is a cross-sectional view illustrating a state in which the friction engagement device is switched to the disconnected mode.

FIG. 25 is a flowchart showing the operation of the two-speed transmission of the first example when switching from a high reduction ratio mode to a low reduction ratio mode.

FIG. 26 is a diagram illustrating change over time of each parameter when the two-speed transmission of the first example is switched from the high reduction ratio mode to the low reduction ratio mode.

FIG. 27 is a cross-sectional view illustrating a part of a two-speed transmission of a comparative example.

FIG. 28 is a diagram schematically illustrating the connected state and the disconnected state between the first friction engagement device and the second friction engagement device in the two-speed transmission of the comparative example.

FIG. 29 is a diagram corresponding to FIG. 20 and illustrating a two-speed transmission according to a modified example of the first embodiment.

FIG. 30 is a schematic diagram illustrating a two-speed transmission of a second example of an embodiment of the present invention.

FIG. 31 is a schematic diagram illustrating a two-speed transmission of a third example of an embodiment of the present invention.

FIG. 32 is a schematic diagram illustrating a two-speed transmission of a fourth example of an embodiment of the present invention.

FIG. 33 is a schematic diagram illustrating a two-speed transmission of a fifth example of an embodiment of the present invention.

FIG. 34 is a schematic diagram illustrating a two-speed transmission of a sixth example of an embodiment of the present invention.

FIG. 35 is a schematic diagram illustrating a two-speed transmission of a seventh example of an embodiment of the present invention.

FIG. 36 is a schematic diagram illustrating a two-speed transmission of an eighth example of an embodiment of the present invention.

FIG. 37 is a schematic diagram illustrating a two-speed transmission of a ninth example of an embodiment of the present invention.

FIG. 38 is a schematic diagram illustrating a two-speed transmission of a tenth example of an embodiment of the present invention.

FIG. 39 is a schematic diagram illustrating a two-speed transmission of an eleventh example of an embodiment of the present invention.

FIG. 40 is a schematic diagram illustrating a two-speed transmission of a twelfth example of an embodiment of the present invention.

FIG. 41 is a diagram for explaining the effect of incorporating a transmission into a drive device that uses an electric motor as a drive source.

FIG. 42 is a diagram illustrating a μ-V characteristic.

## DESCRIPTION OF EMBODIMENTS

[First Example]

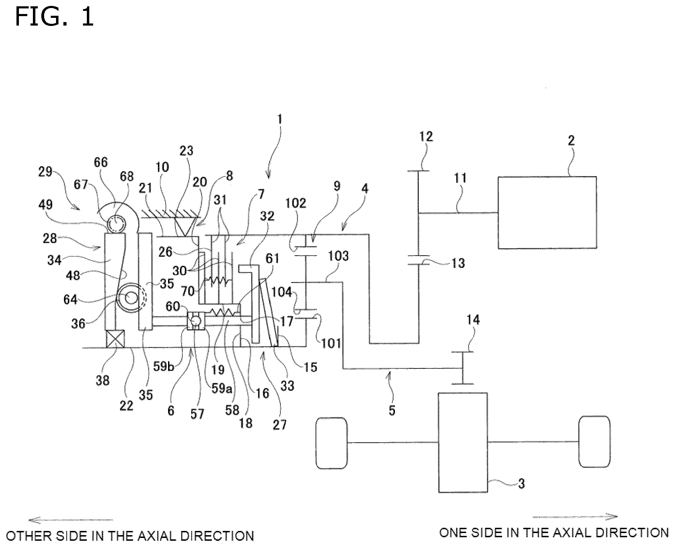

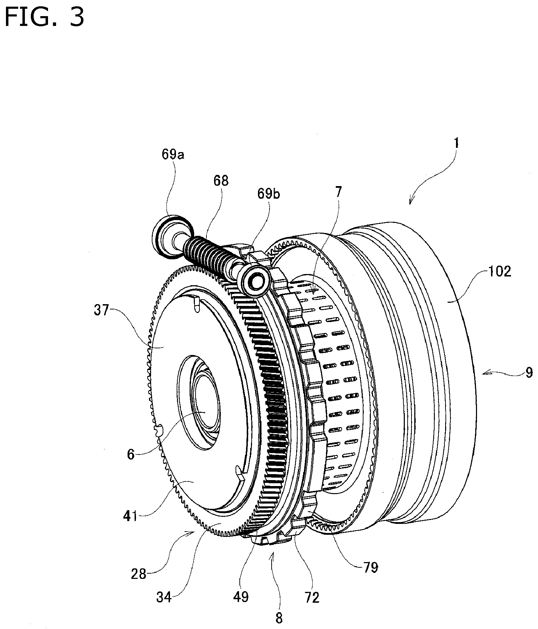

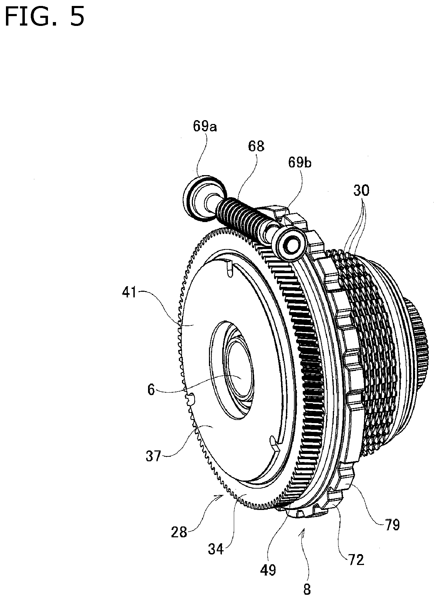

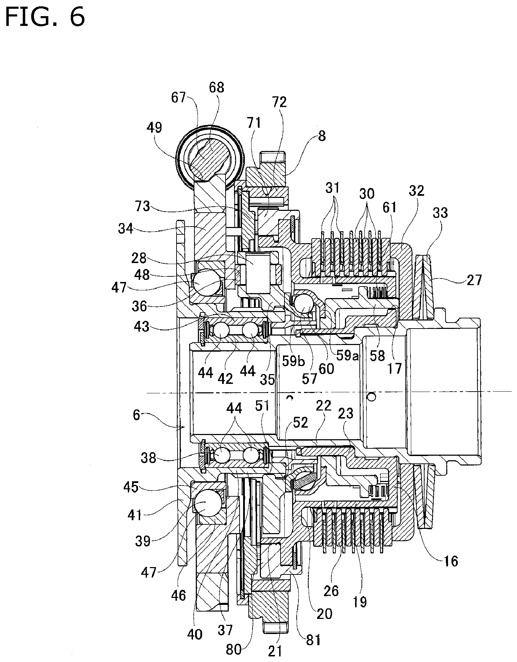

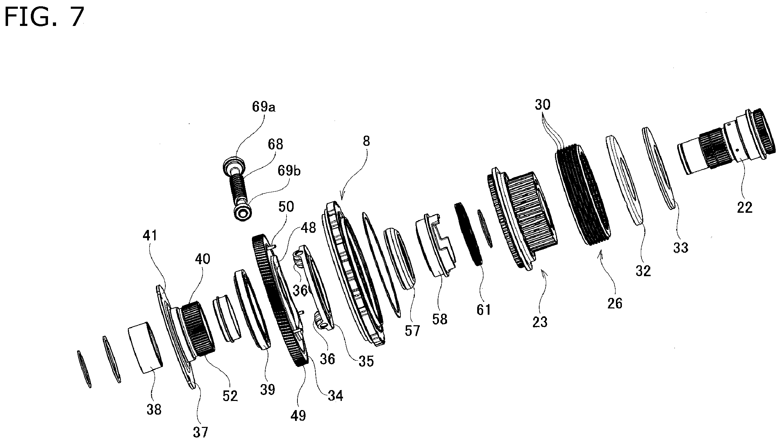

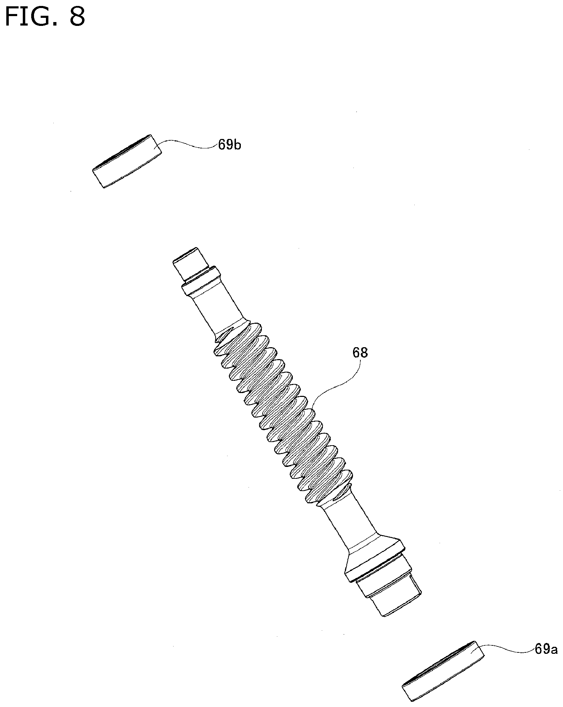

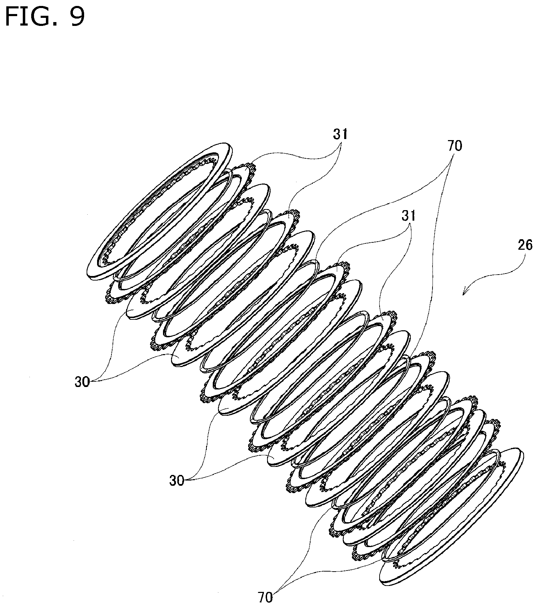

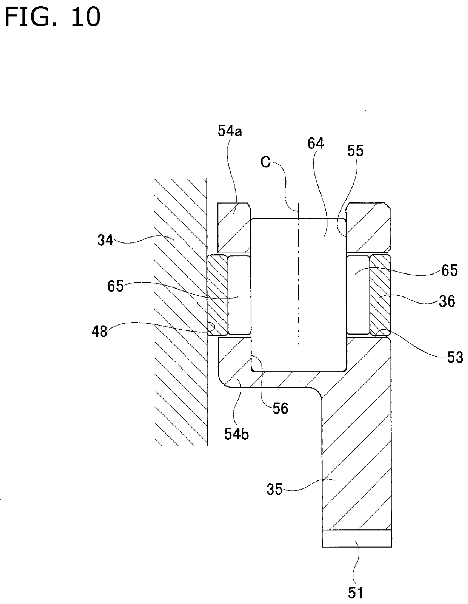

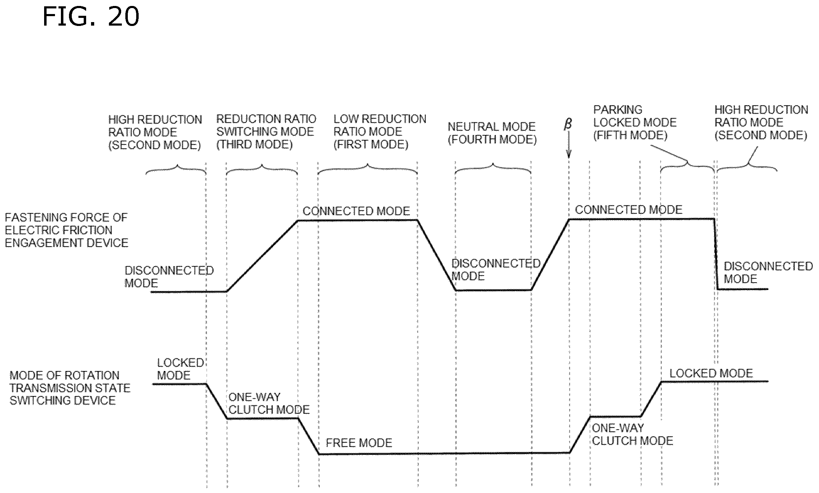

A first example of an embodiment according to the present disclosure will be described with reference to FIG. 1 to FIG. 26. The two-speed transmission 1 of the present example transmits output torque of the drive motor 2, which is a drive source, to a differential device 3 with increasing the output torque, that is, reducing rotational speed, or without increasing the output torque.

In order to facilitate understanding of the invention, each element of the two-speed transmission 1 and the differential device 3 is illustrated schematically in FIGS. 1 to FIG. 2B.

The two-speed transmission 1 of the present example includes a drive motor 2, an input member 4, an output member 5, a friction engagement device 7, a rotation transmission state switching device 8, and a planetary transmission mechanism 9.

The input member 4 is rotatably supported by a fixed portion 10, that is configured by a housing that accommodates the two-speed transmission 1 and does not rotate even during use, through a rolling bearing or the like (not illustrated). In the present example, the input member 4 is configured to be cylindrical (hollow). In addition, the input member 4 also has an input gear 13 at an end portion on one side in the axial direction (the right side in FIG. 1) that engages with a drive gear 12 provided on an output shaft 11 of the drive motor 2.

The output member 5 is supported coaxially with the input member 4 and supported so as to be capable of rotating relative to the input member 4. In the present example, the output member 5 is supported at an inner side in the radial direction of the cylindrical input member 4 through a rolling bearing (not illustrated) or the like so as to be capable of rotating relative to the input member 4. In addition, the output member 5 has an output gear 14 at an end portion on the one side in the axial direction. The output gear 14 engages with a gear provided at an input portion of the differential device 3. The output member 5 rotates and drives the input portion of the differential device 3.

The drive motor 2 rotates and drives the input member 4 thruogh a gear-type reducer consisting of a drive gear 12 and an input gear 13.

The planetary transmission mechanism 9 includes an input element connected to the input member 4, an output element connected to the output member 5 and rotatable relative to the input element, and a rotating element rotatable relative to the input element and the output element.

The planetary transmission mechanism 9 has a sun element, a ring element supported around the sun element so as to be capable of relative rotation with respect to the sun element, a carrier element supported so as to be capable of relative rotation with respect to the sun element and the ring element, and a plurality of planetary elements engaged with the sun element and the ring element so as to be capable of transmitting torque and rotatably supported by the carrier element.

The input element is configured by any one of the sun element, the ring element, and the carrier element.

The output element is configured by any one of the sun element, the ring element, and the carrier element, that is different from the input element.

The rotating element is configured by the remaining elements of the sun element, the ring element, and the carrier element, excluding the input element and the output element.

In the present example, the planetary transmission mechanism 9 is configured by a planetary gear mechanism in which gears engage with each other. That is, the sun element is configured by a sun gear 101, the ring element is configured by a ring gear 102, the carrier element is configured by a carrier 103, and the plurality of planetary elements are configured by a plurality of planetary gears 104. Therefore, the planetary transmission mechanism 9 is configured by a single-pinion type planetary gear mechanism in which each of the plurality of planetary gears 104 engages with both the sun gear 101 and the ring gear 102.

In a case of implementing the technique according to the present disclosure, a double-pinion type planetary gear mechanism may also be adopted as a planetary reduction mechanism. Alternatively, the planetary transmission mechanism may be configured by a planetary roller mechanism. In this case, the sun element is configured by a sun roller, the ring element is configured by a ring roller, and the plurality of planetary elements are configured by a plurality of planetary rollers.

In the present example, the sun gear 101 is provided at an end portion on the one side in the axial direction of the rotating member 6.

The rotating member 6 is supported coaxially with the input member 4 and the output member 5 and supported so as to be capable of rotating relative to the input member 4 and the output member 5. More specifically, the rotating member 6 is rotatably supported by the fixed portion 10 through the rotation transmission state switching device 8, a cam device 28 of the friction engagement device 7, and a radial bearing 38 for rotatably supporting the drive cam 34 of the cam device 28 with respect to the rotating member 6.

The rotating member 6 has a small diameter flange portion 15 that protrudes outward in the radial direction at an intermediate portion in the axial direction, and also has a flange portion 16 that protrudes outward in the radial direction at a portion located farther on the other side in the axial direction (the left side in FIG. 1) than the small diameter flange portion 15.

The flange portion 16 has a first circular ring portion 18 in the form of a hollow circular plate, a first cylindrical portion 19 bent from an end portion on an outer side in the radial direction of the first circular ring portion 18 toward the other side in the axial direction, a second circular ring portion 20 in the form of a hollow circular plate bent from an end portion on the other side in the axial direction of the first cylindrical portion 19 toward the outer side in the radial direction, and a second cylindrical portion 21 bent from an end portion on the outer side in the radial direction of the second circular ring portion 20 toward the other side in the axial direction. The first circular ring portion 18 has partially arc-shaped through holes 17 at a plurality of positions in an intermediate portion in the radial direction thereof for inserting partial cylindrical portions 63 of the pressing members 58 of the friction engagement device 7 therethrough.

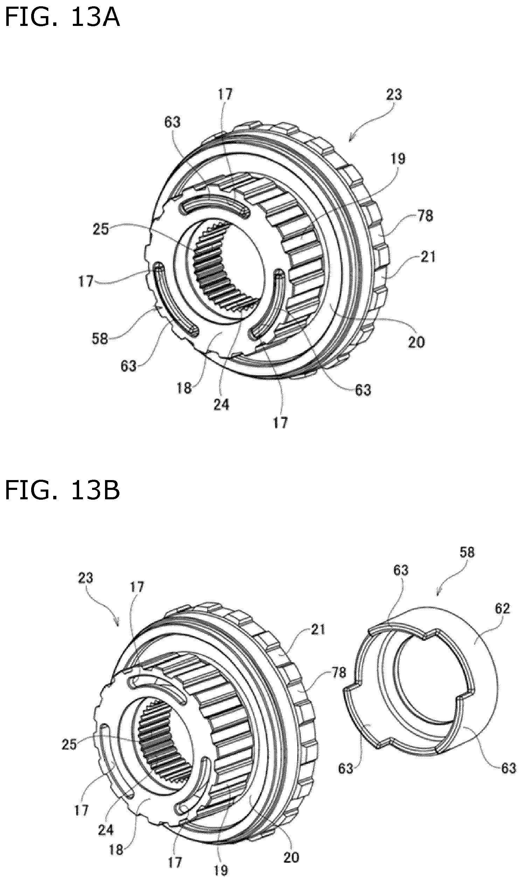

In the present example, the rotating member 6 is configured by externally fitting and fixing a stepped cylindrical member 23, as illustrated on the left side of FIG. 13B, to a shaft member 22 having a small diameter flange portion 15. That is, the stepped cylindrical member 23 has a flange portion 16 and a small diameter cylindrical portion 24 bent from an end portion on an inner side in the radial direction of the first circular ring portion 18 of the flange portion 16 toward the other side in the axial direction. The stepped cylindrical member 23 is supported and fixed by the shaft member 22 by, for example, bring a female spline portion 25 provided on the inner circumferential surface of the small diameter cylindrical portion 24 and a male spline portion provided on the outer circumferential surface of the shaft member 22 into a spline engagement. However, the rotating member may also be configured by joining and fixing the stepped cylindrical member and the shaft member by press fitting, welding, or the like.

In the present example, the rotating element is configured by the sun gear 101.

The ring gear 102 is arranged around the sun gear 101 and coaxially with the sun gear 101, and is connected to the input member 4 so as to be capable of transmitting torque. In the present example, the ring gear 102 is provided at an intermediate portion in the axial direction of the input member 4.

In the present example, the input element is configured by the ring gear 102.

The carrier 103 is arranged between the sun gear 101 and the ring gear 102 in the radial direction and coaxially with the sun gear 101 and the ring gear 102, and is connected to the output member 5 so as to be capable of transmitting torque.

In the present example, the output element is configured by the carrier 103.

The plurality of planetary gears 104 engage with the sun gear 101 and the ring gear 102. Each of the plurality of planetary gears 104 is supported by the carrier 103 so as to be capable of rotation (spinning) about its own central axis.

The rotation transmission state switching device 8 is arranged between the rotating element (in the present example, the sun gear 101) and the fixed portion 10 that does not rotate even during use, and switches between the free mode in which the sun gear 101 as the rotating element can rotate relative to the fixed portion 10, and a locked mode in which the sun gear 101 cannot rotate.

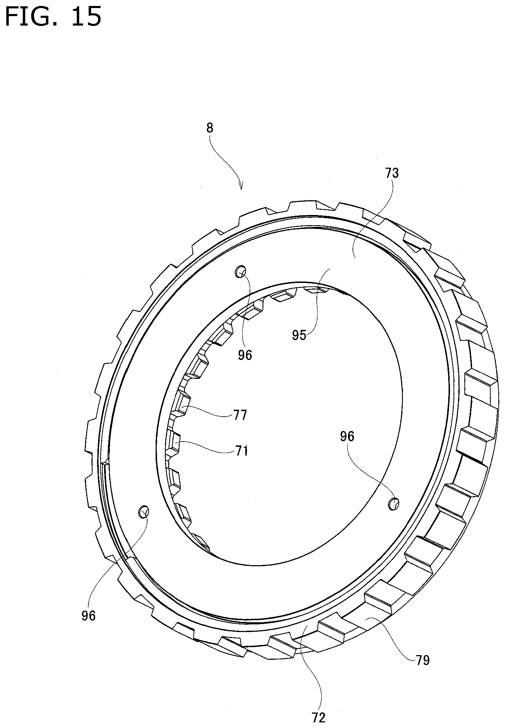

In the present example, as illustrated in FIGS. 15 to 18, the rotation transmission state switching device 8 includes a first member 71 and a second member 72 arranged coaxially with each other, and a mode selection member 73 that rotates in conjunction with the rotation of the drive cam 34.

The first member 71 is connected to the sun gear 101 so as to be capable of transmitting torque, and the second member 72 is supported by and fixed to the fixed portion 10. The rotation transmission state switching device 8 in the present example has a free mode in which rotation of the first member 71 relative to the fixed portion 10 is allowed regardless of the rotation direction of the first member 71, a locked mode in which rotation of the first member 71 relative to the fixed portion 10 is prevented regardless of the rotation direction of the first member 71, and a one-way clutch mode in which rotation of the first member 71 is only allowed in a predetermined direction. More specifically, the rotation transmission state switching device 8 of the present example switches among the free mode, the locked mode, and the one-way clutch mode based on the rotation of the mode selection member 73.

The first member 71 has on the outer circumferential surface thereof, a gear-shaped uneven portion 76 in which engaging recessed portions 74 and protruding portions 75 are alternately arranged in the circumferential direction. The first member 71 has an outer diameter side uneven engaging portion 77 on the inner circumferential surface thereof, with recessed portions and protruding portions being arranged alternately in the circumferential direction. The first member 71 is supported so as not to rotate relative to the rotating member 6 by engaging the outer diameter side uneven engaging portion 77 with an inner diameter side uneven engaging portion 78 provided on the outer circumferential surface of the second cylindrical portion 21 of the rotating member 6, and rotates integrally with the rotating member 6 and the sun gear 101.

The second member 72 is supported around the first member 71 and coaxially with the first member 71 and is capable of relative rotation with respect to the first member 71. The inner circumferential surface of the second member 72 faces the tip-end surfaces of the protruding portions 75 of the first member 71 with a gap therebetween. The second member 72 has an inner diameter side uneven engaging portion 79 on the outer circumferential surface thereof, with recessed portions and protruding portions being arranged alternately in the circumferential direction. The second member 72 is supported so as not to rotate relative to the fixed portion 10 by engaging the inner diameter side uneven engaging portion 79 with the outer diameter side uneven engaging portion provided on the inner circumferential surface of the fixed portion 10.

The second member 72 includes a base portion 80 having a rectangular cross-sectional shape, and a cylindrical portion 81 that protrudes from an end portion on the outer side in the radial direction of a surface on the one side in the axial direction of the base portion 80 over the entire circumference towards the one side in the axial direction.

The base portion 80 has a plurality of first retaining recessed portions 82 and a plurality of second retaining recessed portions 83 (six each in the illustrated example) that are alternately arranged in the circumferential direction.

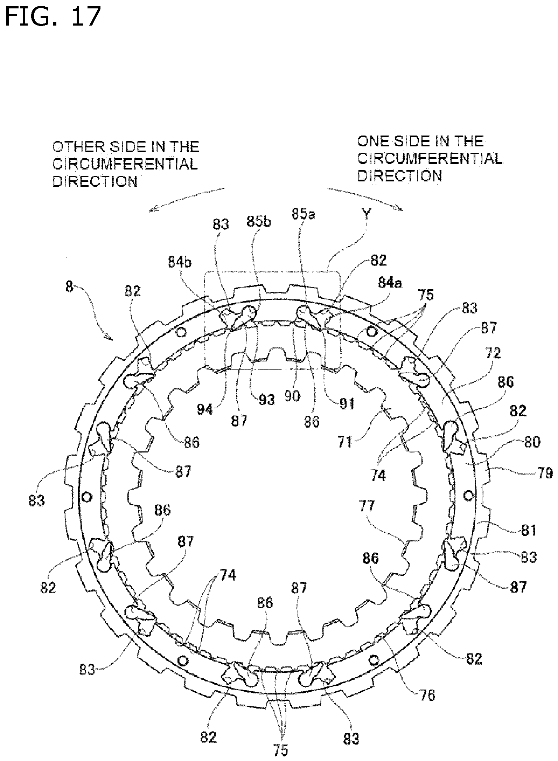

Each of the first retaining recessed portions 82 opens to the inner circumferential surface and a surface on the other side in the axial direction of the base portion 80. Each first retaining recessed portion 82 includes a spring retaining portion 84a and a pedestal portion 85a. The spring retaining portion 84a has a roughly rectangular opening shape with a long axis thereof extending outward in the radial direction as approaching the one side in the circumferential direction (the front clockwise side in FIGS. 17 to 19) when viewed from the other side in the axial direction. The pedestal portion 85a has a generally circular opening shape when viewed from the other side in the axial direction, and is arranged adjacent to the other side in the circumferential direction of the spring retaining portion 84a (the rear side in the clockwise direction in FIGS. 17 to 19).

Each of the second retaining recessed portions 83 opens to the inner circumferential surface and the other side surface in the axial direction of the base portion 80, and includes a spring retaining portion 84b and a pedestal portion 85b. When viewed from the other side in the axial direction, the second retaining recessed portion 83 has a shape symmetrical to the first retaining recessed portion 82 with respect to an imaginary plane including the central axis of the second member 72.

In order to achieve the free mode, the locked mode, and the one-way clutch mode, the rotation transmission state switching device 8 has a first claw member 86, a second claw member 87, a first claw biasing member 88, and a second claw biasing member 89 between the first member 71 and the second member 72. In the present example, the number of first claw members 86, second claw members 87, first claw biasing members 88, and second claw biasing members 89 are plural and equal.

Each of the first claw members 86 includes a first base portion 90 and a first engagement claw 91.

The first base portion 90 is configured in a substantially cylindrical shape and is supported (pivoted) on the pedestal portion 85a of the first retaining recessed portion 82 so as to be able to pivot about a pivot axis parallel to the central axis of the second member 72.

The first engagement claw 91 is formed in a substantially flat plate shape and extends from the first base portion 90 towards one side in the circumferential direction. In the first engagement claw 91, a portion on the other side in the axial direction is made to face (engage with) the outer circumferential surface of an annular protruding portion 92 of the mode selection member 73, and a portion on the one side in the axial direction is made to face an uneven portion 76 of the first member 71 (engages with the engagement recess 74 so as to be able to engage and disengage).

Each second claw member 87 includes a second base portion 93 supported to be pivotable on the pedestal portion 85b of the second retaining recessed portion 83, and a second engagement claw 94 extending from the second base portion 93 toward the other side in the circumferential direction. When viewed from the other side in the axial direction, the second claw member 87 has a shape symmetrical to the first engagement claw 91 with respect to an imaginary plane including the central axis of the second member 72, and is arranged symmetrical to the first engagement claw 91.

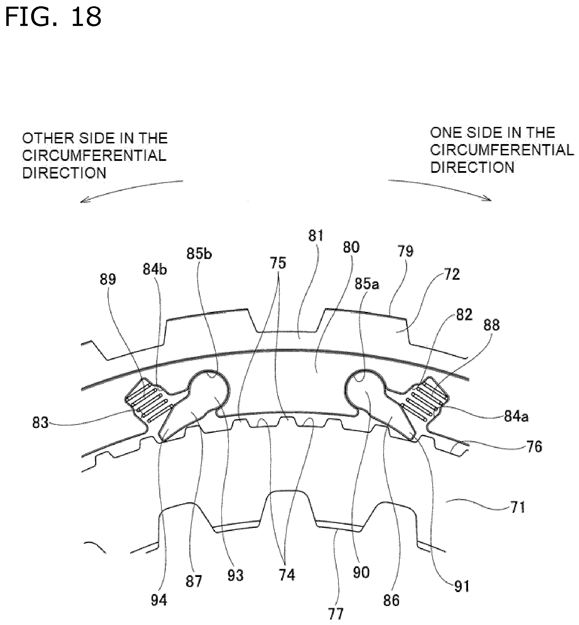

The first claw biasing member 88 elastically biases the first engagement claw 91 of the first claw member 86 in a direction to engage with an engaging recessed portion 74 of the first member 71. That is, the first claw biasing member 88 applies a biasing force to the first claw member 86 in a direction that causes the first claw member 86 to pivot in the clockwise direction in FIG. 18 around the central axis (pivot) of the first base portion 90. More specifically, the first claw biasing member 88 is configured by an elastic member such as a coil spring, and is held in an elastically compressed state between a bottom surface (surface facing inward in the radial direction) of the spring retaining portion 84a of the first retaining recessed portion 82 and the outer side surface in the radial direction of the first engagement claw 91.

The second claw biasing member 89 is configured by an elastic member similar to the first claw biasing member 88, and is arranged symmetrically to the first claw biasing member 88 with respect to an imaginary plane including the central axis of the second member 72 when viewed from the other side in the axial direction. That is, the second claw biasing member 89 is held in an elastically compressed state between a bottom surface of the spring retaining portion 84b of the second retaining recessed portion 83 and an outer side surface in the radial direction of the second engagement claw 94, and elastically biases the second engagement claw 94 of the second claw member 87 in a direction to engage with the engaging recessed portion 74 of the first member 71.

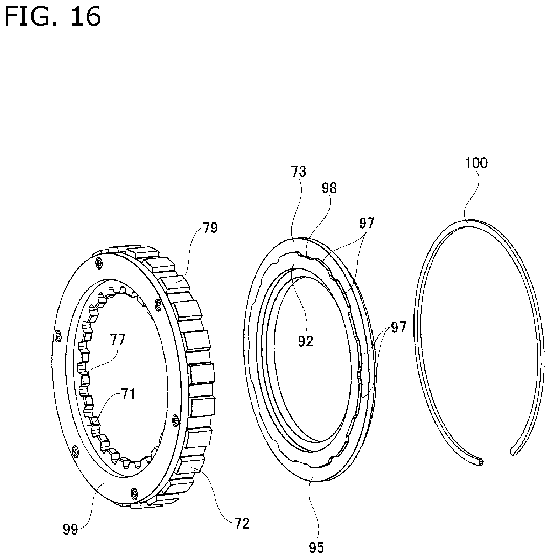

As illustrated in FIG. 16, the mode selection member 73 includes a substantially circular plate-shaped base portion 95 and an annular protruding portion 92 that protrudes from an intermediate portion in the radial direction of a surface on the other side in the axial direction of the base portion 95 toward the other side in the axial direction over the entire circumference.

The base portion 95 has plate side engagement holes 96 at a plurality of locations (three locations in the illustrated example) at equal intervals in the circumferential direction of an intermediate portion in the radial direction of the surface on the other side in the axial direction. End portions on the one side in the axial direction of pin portions 50 are respectively fitted (engaged) into the plate-side engagement holes 96 without any looseness. That is, the mode selection member 73 rotates integrally with (in the same direction and at the same speed as) the drive cam 34.

The annular protruding portion 92 has protrusions 97 that protrude outward in the radial direction at a plurality of locations in the circumferential direction on the outer circumferential surface. That is, the annular protruding portion 92 has a gear-shaped uneven portion 98 in which protrusions 97 and recessed portions are alternately arranged in the circumferential direction on the outer circumferential surface.

The first member 71, the second member 72, and the mode selection member 73 are combined by a cover body 99 and a retaining ring 100 so as to be capable of relative rotation but not capable of relative displacement in the axial direction (so as to prevent inadvertent separation in the axial direction), thereby forming the rotation transmission state switching device 8.

With the first member 71 arranged at an inner side in the radial direction of a portion on the one side in the axial direction of the base portion 80 of the second member 72, a circular ring-shaped cover body 99 is supported by and fixed to a surface on the one side in the axial direction of the second member 72 by screwing, and a surface on the other side in the axial direction of the inner portion in the radial direction of the cover body 99 faces the surface on the one side in the axial direction of the first member 71. This prevents the first member 71 from displacing toward the one side in the axial direction with respect to the second member 72.

With the annular protruding portion 92 of the mode selection member 73 arranged at an inner side in the radial direction of a portion on the other side in the axial direction of the base portion 80 of the second member 72, with the tip-end surface (surface on the one side in the axial direction) of the annular protruding portion 92 in sliding contact with or closely facing the surface on the other side in the axial direction of the first member 71, and with the surface on the one side in the axial direction of a portion on the outer side in the radial direction of the base portion 95 in sliding contact with or closely facing the surface on the other side in the axial direction of the base portion 80 of the second member 72, the retaining ring 100 is engaged with the end portion on the other side in the axial direction of the inner circumferential surface of the cylindrical portion 81 of the second member 72. This prevents the first member 71 and the mode selection member 73 from displacing toward the other side in the axial direction with respect to the second member 72.

The rotation transmission state switching device 8 is configured to be able to switch between the free mode, the locked mode, and the one-way clutch mode by switching the engagement state between the first engagement claw 91 of the first claw member 86 and the engaging recessed portion 74 of the first member 71, and the engagement state between the second engagement claw 94 of the second claw member 87 and the engaging recessed portion 74 based on the rotation of the mode selection member 73.

<Free Mode>

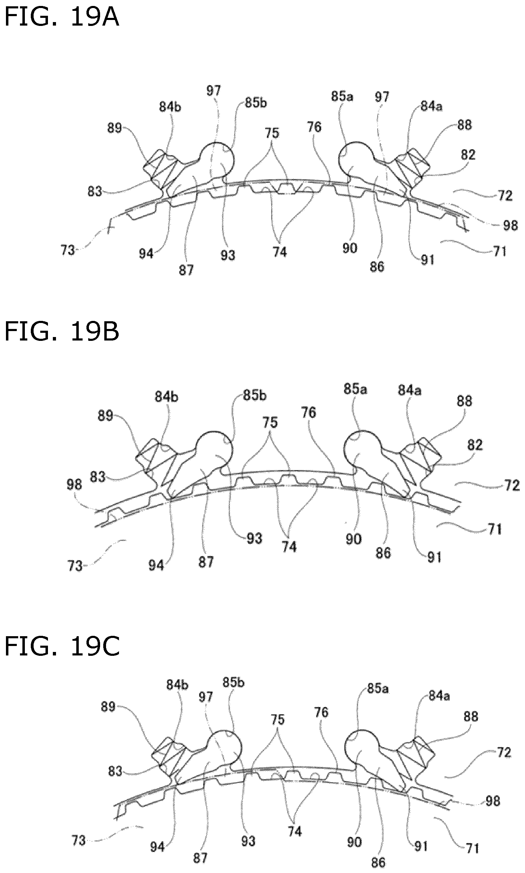

In the free mode, the phase in the circumferential direction of the mode selection member 73 relative to the second member 72 is adjusted, and as illustrated in FIG. 19A, the protrusion 97 pushes the first engagement claw 91 outward in the radial direction against the elastic force of the first claw biasing member 88, and pushes the second engagement claw 94 outward in the radial direction against the elastic force of the second claw biasing member 89.

As a result, the engaging recessed portions 74 of the first member 71 are disengaged from the first engagement claw 91 and the second engagement claw 94. In this state, regardless of the relative rotation direction between the first member 71 and the second member 72, the first member 71 is allowed to rotate relative to the second member 72. In other words, regardless of the rotation direction of the first member 71, rotation of the first member 71 relative to the fixed portion 10 is allowed.

<Locked Mode>

In the locked mode, the phase in the circumferential direction of the mode selection member 73 with respect to the second member 72 is adjusted, and as illustrated in FIG. 19B, the protrusions 97 are positioned at portions offset in the circumferential direction from the first engagement claw 91 of the first claw member 86 and the second engagement claw 94 of the second claw member 87. That is, in the circumferential direction, the recessed portions of the uneven portion 98 are aligned in phase with the first engagement claws 91 and the second engagement claws 94.

As a result, the engaging recessed portions 74 of the first member 71 engage with the first engagement claws 91 and the second engagement claws 94. In this state, regardless of the relative rotation direction between the first member 71 and the second member 72, the first member 71 is prevented from rotating relative to the second member 72. That is, regardless of the direction of rotation of the first member 71, rotation of the first member 71 relative to the fixed portion 10 is prevented.

<One-way Clutch Mode>

In the one-way clutch mode, the phase in the circumferential direction of the mode selection member 73 relative to the second member 72 is adjusted, and as illustrated in FIG. 19C, the protrusion 97 pushes only the second engagement claw 94 outward in the radial direction against the elastic force of the second claw biasing member 89.

As a result, the engaging recessed portions 74 of the first member 71 and the first engagement claws 91 are engaged, and the engaging recessed portions 74 and the second engagement claws 94 are disengaged. In this state, only rotation of the first member 71 relative to the second member 72 in the predetermined direction (clockwise in FIG. 19C) is allowed, and rotation in the direction opposite to the predetermined direction (counterclockwise in FIG. 19C) is prevented.

That is, when the first member 71 attempts to rotate in the predetermined direction relative to the second member 72, the first engagement claws 91 are pushed outward in the radial direction by the protruding portion 75 of the uneven portion 76 against the elastic force of the first claw biasing members 88. As a result, the first member 71 is allowed to rotate in the predetermined direction. On the other hand, in a case in which the first member 71 attempts to rotate relative to the second member 72 in the direction opposite to the predetermined direction, the engagement between the engaging recessed portions 74 and the first engagement claws 91 prevents the first member 71 from rotating in the direction opposite to the predetermined direction. In short, the rotation transmission state switching device 8 operates as a ratchet-type one-way clutch.

Note that the predetermined direction coincides with the forward rotation direction of the input member 4. The normal rotation direction of the input member 4 refers to the rotation direction of the input member 4 when moving the automobile forward.

The friction engagement device 7 has at least one first friction plate 30 and at least one second friction plate 31 supported so as to be capable of relative displacement in the axial direction, and is arranged between any two elements of the sun element (sun gear 101), the ring element (ring gear 102), and the carrier element (carrier 103), and by pressing the first friction plate 30 and the second friction plate 31 against each other, switches to the connected mode in which the any two elements rotate together, and by releasing the force pressing the first friction plate 30 and the second friction plate 31 against each other, switches to the disconnected mode in which the any two elements rotate relative to each other.

In the present example, the friction engagement device 7 is provided between the sun gear 101 and the ring gear 102, and in the connected mode, the sun gear 101 and the ring gear 102 rotate together, and in the disconnected mode, the sun gear 101 and the ring gear 102 rotate relative to each other. Thus, in the connected mode, torque is transmitted between the input member 4 and the rotating member 6, and in the disconnected mode, torque is not transmitted between the input member 4 and the rotating member 6.

In the present example, the friction engagement device 7 includes a friction engagement portion 26, an elastic biasing member 27, a cam device 28, and an electric actuator 29.

In the present example, the friction engagement portion 26 is configured by a multi-plate clutch in which a plurality of first friction plates 30 supported by the rotating member 6 and a plurality of second friction plates 31 supported by the input member 4 are alternately stacked.

The plurality of first friction plates 30 are supported on the outer circumferential surface of the first cylindrical portion 19 so as to be capable of displacement in the axial direction, and so as not to be capable of relative rotation with respect to the first cylindrical portion 19.

The plurality of second friction plates 31 are supported on the inner circumferential surface of an end portion on the other side in the axial direction of the input member 4 so as to be capable of displacement in the axial direction and so as not to be capable of relative rotation with respect to the input member 4.

The elastic biasing member 27 is provided between the rotating member 6 and the frictional engagement portion 26, and elastically biases the first friction plate 30 and the second friction plate 31 in a direction in which they are pressed against each other. In the present example, the elastic biasing member 27 has a piston 32 and an elastic member 33.

The piston 32 is supported so as to be capable of displacement in the axial direction relative to the rotating member 6. In the present example, the piston 32 is configured as a hollow circular plate, and is supported around a portion of the rotating member 6 between the small diameter flange portion 15 and the flange portion 16 in the axial direction so as to be capable of displacement in the axial direction relative to the rotating member 6. In the piston 32, an end surface on the other side in the axial direction of a portion on the outer side in the radial direction faces a surface on the one side in the axial direction of the first friction plate 30 or the second friction plate 31 that is located the farthest on the one side in the axial direction of the first friction plate 30 or the second friction plate 31.

The elastic member 33 is provided between the rotating member 6 and the piston 32. In the present example, the elastic member 33 is sandwiched in an elastically compressed state between the surface on the other side in the axial direction of the small diameter flange portion 15 of the rotating member 6 and the surface on the one side in the axial direction of the piston 32. **In** other words, by pressing the first friction plate 30 or the second friction plate 31 that is located the farthest on the one side in the axial direction toward the other side in the axial direction through the piston 32 by the force of the elastic member 33 attempting to elastically restore, the elastic biasing member 27 elastically biases the first friction plate 30 and the second friction plate 31 in directions pressing against each other.

In the present example, the elastic member 33 is composed of at least one disc spring (two disc springs in the present example). However, in a case of implementing the technique according to the present disclosure, the specific configuration of the elastic member is not particularly limited. For example, the elastic member may be configured by at least one coil spring.

The cam device 28 has a drive cam 34 and a driven cam 35 supported so as to be capable of relative rotation with respect to the drive cam 34 and capable of relative displacement in the axial direction. As the drive cam 34 rotates, the cam device 28 relatively displaces the driven cam 35 in a direction that increases a distance in the axial direction between the drive cam 34 and the driven cam 35, and thereby presses the elastic biasing member 27 in a direction that releases the force pressing the first friction plate 30 and the second friction plate 31 against each other.

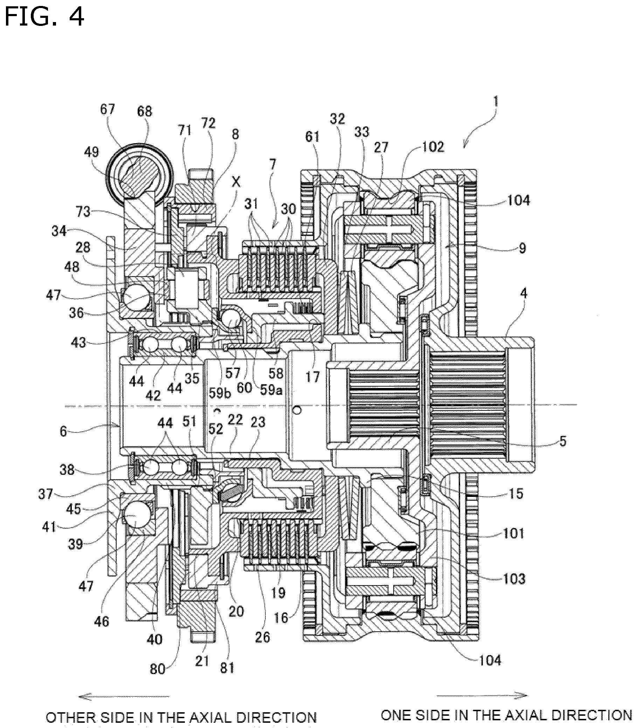

In the present example, the drive cam 34 is supported by the rotating member 6 so as to be capable of rotating relative to the rotating member 6 and the input member 4 and so as not to be capable of displacement in the axial direction relative to the rotating member 6. More specifically, as illustrated in FIG. 4 and other figures, the drive cam 34 is supported by the rotating member 6 through a tubular member 37, a radial bearing 38, and an angular ball bearing 39 so as to be capable of rotating relative to the rotating member 6.

The tubular member 37 has a cylindrical portion 40 and an outward-facing flange portion 41 bent outward in the radial direction from an end portion on the other side in the axial direction of the cylindrical portion 40. The outward-facing flange portion 41 of the tubular member 37 is supported by and fixed to the fixed portion 10 by screwing or the like.

The radial bearing 38 has an inner ring 42 externally fitted and fixed to an end portion on the other side in the axial direction of the rotating member 6, an outer ring 43 internally fitted and fixed to the cylindrical portion 40 of the tubular member 37, and a plurality of rolling elements 44 arranged between the inner ring 42 and the outer ring 43 so as to be able freely roll. In the illustrated example, the radial bearing 38 is configured as a double-row deep groove ball bearing that uses balls as the rolling elements 44. However, the radial bearing is not particularly limited as long as the radial bearing can support radial and axial loads, and could be, for example, a deep groove ball bearing, a radial angular contact ball bearing, or a radial tapered roller bearing.

The angular ball bearing 39 has an inner ring 45 externally fitted and fixed to the cylindrical portion 40 of the tubular member 37, an outer ring 46 internally fitted and fixed to the drive cam 34, and a plurality of balls 47 arranged between the inner ring 45 and the outer ring 46 so as to be able to freely roll.

In the present example, the drive cam 34 has wheel teeth 49 as a helical gear on the outer circumferential surface, and also has pin portions 50 that protrude toward the one side in the axial direction at a plurality of locations in the circumferential direction (three locations in the illustrated example) of an intermediate portion in the radial direction of a surface on the one side in the axial direction.

The driven cam 35 is arranged around the rotating member 6 so as to be capable of displacement only in the axial direction. In the present example, the driven cam 35 has a hollow circular plate shape, and is supported by the fixed portion 10 so as to be capable of displacement in the axial direction. In the present example, a female spline portion 51 provided on the inner circumferential surface of the driven cam 35 is engaged using a spline engagement with a male spline portion 52 provided on the outer circumferential surface of a portion on the one side in the axial direction of the cylindrical portion 40 of the tubular member 37, thereby supporting the driven cam 35 by the fixed portion 10 so as to be capable of displacement in the axial direction.

However, the method of supporting the driven cam by the fixed portion is not particularly limited as long as the driven cam can be supported by the fixed portion so as to be capable of only displacement in the axial direction. For example, the driven cam can be supported by the fixed portion so as to be capable of displacement in the axial direction by a key engagement between a protruding portion on one of the driven cam and the fixed portion with a recessed groove in the other.

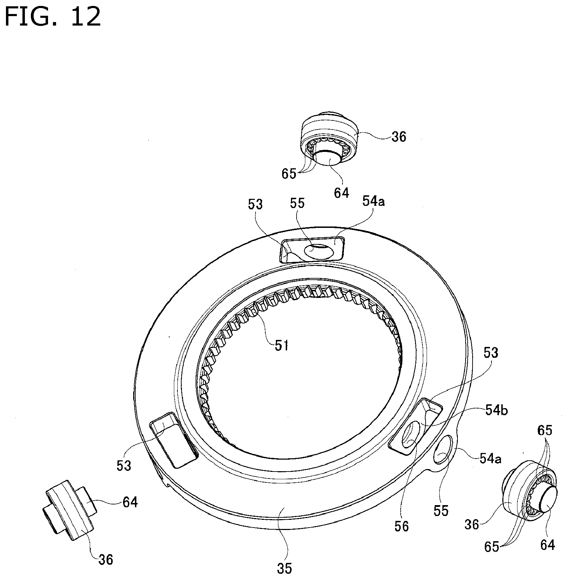

As illustrated in FIG. 12, the driven cam 35 has rectangular holes 53 penetrating in the axial direction at a plurality of locations (three locations in the illustrated example) in the circumferential direction of an intermediate portion in the radial direction, and has support plate portions 54a, 54b having an approximately semicircular plate shape protruding toward the other side in the axial direction from portions on both sides in the radial direction of each of the rectangular holes 53. Of the support plate portions 54a, 54b, the support plate portion 54a on the outer side in the radial direction has a support hole 55 that is a circular hole that penetrates in the radial direction, and the support plate portion 54b on the inner side in the radial direction has a support recessed portion 56 with a circular opening on the surface on the outer side in the radial direction.

The driven cam 35 faces the piston 32 of the elastic biasing member 27 through a thrust bearing 57 and a pressing member 58.

The thrust bearing 57 is provided between the pressing member 58 and the driven cam 35. The thrust bearing 57 has a pair of raceways 59a, 59b and a plurality of rolling elements 60 arranged to roll freely between the pair of raceways 59a, 59b. Of the pair of raceways 59a, 59b, the raceway 59b on the other side in the axial direction is supported by and fixed to the driven cam 35.

The pressing member 58 has a cylindrical base portion 62 and partial cylindrical portions 63 that protrude toward the one side in the axial direction from a plurality of locations in the circumferential direction (three locations in the illustrated example) of an end portion on the one side in the axial direction of the base portion 62. Of the pair of raceways 59a, 59b of the thrust bearing 57, the raceway 59a on the one side in the axial direction is supported by and fixed to an end portion on the other side in the axial direction of the base portion 62. The partial cylindrical portions 63 are respectively inserted into the through holes 17 of the rotating member 6, and the tip-end portions (end portions on the one side in the axial direction) of the partial cylindrical portions 63 face an intermediate portion in the radial direction of a surface on the other side in the axial direction of the piston 32.

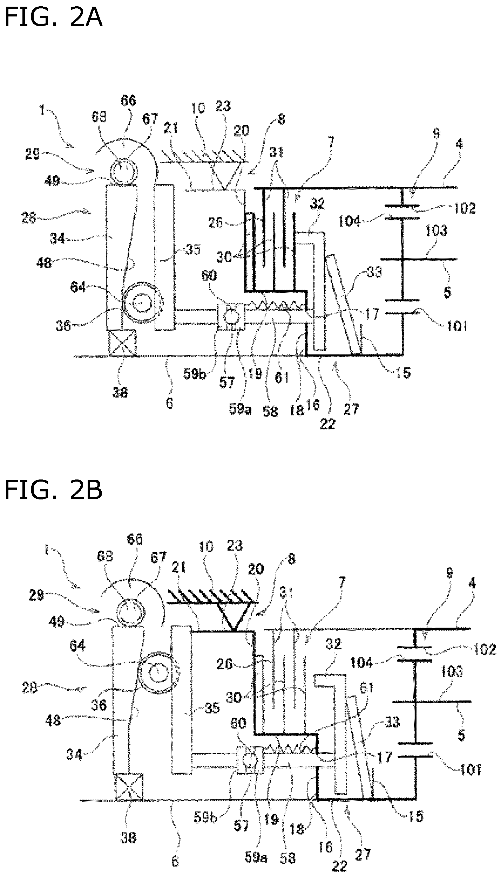

In the present example, a preload applying means 61 for applying a preload to the thrust bearing 57 is provided between the pressing member 58 and the rotating member 6. The preload applying means 61 is sandwiched in an elastically compressed state between the pressing member 58 and a surface on the other side in the axial direction of the first circular ring portion 18 of the flange portion 16 of the rotating member 6. As a result, as illustrated in FIG. 2B, even in a state in which the piston 32 is pressed toward the one side in the axial direction against the elastic restoring force of the elastic member 33, a preload is applied to the thrust bearing 57 and the thrust bearing 57 is prevented from falling out from between the elastic biasing member 27 and the cam device 28.

Note that the elastic force of the preload applying means 61 is smaller than the elastic restoring force of the elastic member 33. The preload applying means 61 can be configured by, for example, at least one disc spring or at least one coil spring. In the present example, the preload applying means 61 is configured by one coil spring.

In the present example, the cam device 28 has a plurality of rolling elements 36 (three in the present example) and a drive cam surface 48 provided on the drive cam 34 as a means for relatively displacing the drive cam 34 and the driven cam 35.

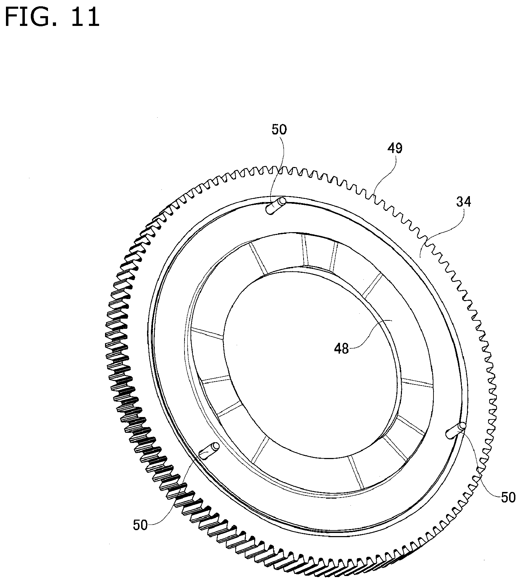

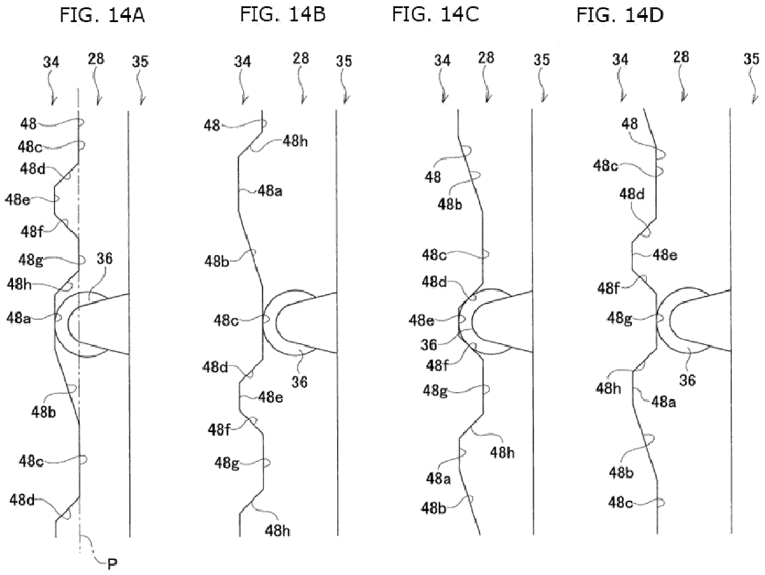

As illustrated in FIG. 11, the drive cam surface 48 is formed by arranging an equal number of recessed portions and protruding portions alternately in the circumferential direction on an inner side portion in the radial direction of a surface on the one side in the axial direction of the drive cam 34. As illustrated in FIGS. 14A to 14D, the drive cam surface 48 is configured by arranging a first bottom portion 48a, a first inclined surface portion 48b, a first flat surface portion 48c, a second inclined surface portion 48d, a second bottom portion 48e, a third inclined surface portion 48f, a second flat surface portion 48g, and a fourth inclined surface portion 48h in this order, with the number of times being repeated corresponding to the number of rolling elements 36 (three times in the present example).

Of the drive cam surface 48, the first flat surface portion 48c and the second flat surface portion 48g are located the farthest on the one side in the axial direction, that is, are located at the tip-end portion of protruding portions, and the first bottom portion 48a and the second bottom portion 48e are located the farthest on the other side in the axial direction. The inclination angles of the third inclined surface portion 48f and the fourth inclined surface portion 48h with respect to an imaginary plane P perpendicular to the central axis of the drive cam 34 are larger than the inclination angle of the first inclined surface portion 48b with respect to the imaginary plane P.

The inclination angle of the first inclined surface portion 48b and the inclination angles of the third inclined surface portion 48f and the fourth inclined surface portion 48h are all set to a magnitude that allows the rolling elements 36 to move either in a rolling down manner or in rolling up manner. The third inclined surface portion 48f and the fourth inclined surface portion 48h are inclined in opposite directions from each other and have the same inclination angle as each other.

However, the inclination angles of the third inclined surface portion 48f and the fourth inclined surface portion 48h may be different from each other. In addition, the inclination angle of the first inclined surface portion 48b and the inclination angles of the third inclined surface portion 48f and the fourth inclined surface portion 48h may be the same as each other.

The inclination angle of the second inclined surface portion 48d with respect to the imaginary plane P may be set to any value as long as the rolling elements 36 can ride up thereon.

Each of the rolling elements 36 has a cylindrical shape and is supported by a columnar support shaft 64 and a plurality of rollers 65 so as to be able to freely rotate about its own axis relative to the support plate portions 54a, 54b. That is, an end portion on the outer side in the radial direction of the support shaft 64 centered on the central axis of the driven cam 35 is internally fitted and fixed into the support hole 55 of the support plate portion 54a on the outer side in the radial direction, and an end portion on the inner side in the radial direction of the support shaft 64 centered on the central axis of the driven cam 35 is internally fitted and fixed into the support recess 56 of the support plate portion 54b on the inner side in the radial direction.

The plurality of rollers 65 are sandwiched between the inner circumferential surface of the rolling element 36 and the outer circumferential surface of an intermediate portion in the axial direction of the support shaft 64 so as to be able to freely roll. Thus, the rolling element 36 is supported by the driven cam 35 so as to be freely rotatable (rotating) about a rotation axis C that faces in a radial direction centered on the central axis of the driven cam 35.

In a state in which the rolling elements 36 are supported by the driven cam 35, a portion on the one side in the axial direction of the rolling element 36 is arranged inside the rectangular holes 53. The outer circumferential surface of each of the rolling elements 36 is in rolling contact with the drive cam surface 48 provided on the surface on the other side in the axial direction of the drive cam 34.

In the two-speed transmission 1 of the present example, the drive cam 34 is rotationally driven to increase or decrease the amount that the rolling element 36 rides up from the first bottom portion 48a or the second bottom portion 48e of the drive cam surface 48, thereby moving the driven cam 35 in the axial direction and switching the friction engagement portion 26 between the connected state and the disconnected state.

In a case in which the frictional engagement portion 26 is in the disconnected state, as illustrated in FIG. 14B and FIG. 14D, the rolling element 36 is positioned on the first flat surface portion 48c or the second flat surface portion 48g of the drive cam surface 48, or the amount that the rolling elements 36 rides up onto the first inclined surface portion 48b, the second inclined surface portion 48d, the third inclined surface portion 48f, or the fourth inclined surface portion 48h is increased.

By moving the driven cam 35 to the one side in the axial direction, which is the direction in which the distance in the axial direction between the drive cam 34 and the driven cam 35 increases, the piston 32 of the elastic biasing member 27 is pressed toward the one side in the axial direction through the thrust bearing 57 and the pressing member 58, and the elastic member 33 is elastically compressed. This reduces the force pressing the first friction plate 30 and the second friction plate 31 against each other, and ultimately causes the force to be lost. In this manner, the friction engagement portion 26 is disconnected, and the friction engagement device 7 is switched to the disconnected mode.

On the other hand, in a case in which the frictional engagement portion 26 is in the connected state, as illustrated in FIG. 14A and FIG. 14C, the rolling element 36 is positioned at the first bottom portion 48a or the second bottom portion 48e of the drive cam surface 48, or the amount that the rolling elements 36 rides up onto the first inclined surface portion 48b, the second inclined surface portion 48d, the third inclined surface portion 48f, or the fourth inclined surface portion 48h is reduced.

As a result, by moving the driven cam 35 to the other side in the axial direction, which is the direction in which the distance in the axial direction between the drive cam 34 and the driven cam 35 decreases, the force of the elastic biasing member 27 pressing the piston 32 toward the one side in the axial direction is reduced. When the force pressing the piston 32 toward the one side in the axial direction decreases, the piston 32, thrust bearing 57, and pressing member 58 are pressed toward the other side in the axial direction mainly by the elastic restoring force of the first friction plate 30 and the elastic member 33, and the piston 32 presses the first friction plate 30 or the second friction plate 31 closest to the one side in the axial direction toward the other side in the axial direction. Therefore, by the first friction plate 30 and the second friction plate 31 being pressed against each other, and the friction engagement portion 26 being connected, the friction engagement device 7 is switched to the connected mode.

In the two-speed transmission 1 of the present example, the driven cam 35 can be reliably displaced in the axial direction based on the rotation of the drive cam 34, and switching the mode of the two-speed transmission 1 can be performed with high precision.

In a case in which balls are used as the rolling elements and the drive cam is rotated, there is a possibility that slippage may occur at the area of rolling contact between the surface of the rolling element and the drive cam surface. In a case in which slippage occurs at the area of rolling contact between the surface of the rolling element and the drive cam surface, the driven cam may not be able to displace in the axial direction, or the amount of displacement in the axial direction of the driven cam relative to the amount of rotation of the drive cam may not be sufficiently secured.

In the two-speed transmission 1 of the present example, rollers are used as the rolling elements 36, and the rolling elements 36 are supported so as to be able to freely rotate (spin) around a rotation axis C facing in the radial direction centered on the central axis of the driven cam 35. Therefore, it is possible to prevent slippage from occurring at the area of rolling contact between the outer circumferential surface of the rolling element 36 and the drive cam surface 48, and due to the rotation of the drive cam 34, the driven cam 35 can be reliably displaced in the axial direction. As a result, switching the mode of the two-speed transmission 1 can be performed with high accuracy. However, balls may also be used as the rolling elements of the cam device.

In the present example, the cam device 28 is configured by sandwiching the rolling elements 36 between the drive cam 34 and the driven cam 35; however, in a case of implementing the technique according to the present disclosure, the cam device is not particularly limited as long as the cam device can press the elastic biasing member in the direction to release the force pressing the first friction plate and the second friction plate against each other, and any other known means may also be applied.

For example, the cam device may have a structure in which the rolling elements are arranged between the drive cam surface of the drive cam and the driven cam surface of the driven cam, a structure in which the drive cam surface of the drive cam and the driven cam surface of the driven cam are directly engaged (sliding) with each other, or a structure in which the driven cam has a guide groove that extends in the circumferential direction on the outer circumferential surface thereof and changes in the axial direction, and the drive cam has an engaging protruding portion that engages with the guide groove to enable displacement along the guide groove.

The electric actuator 29 has a shift motor 66 and a reducer 67, and the drive cam 34 is rotated and driven by the shift motor 66 through the reducer 67.

In the present example, the reducer 67 is configured by a worm reducer. That is, the reducer 67 is configured by worm teeth provided on the outer circumferential surface of a worm 68 connected to an output shaft of the shift motor 66 engaging with wheel teeth 49 provided on the outer circumferential surface of the drive cam 34. The worm 68 is rotatably supported by the fixed portion 10 by a pair of support bearings 69a, 69b.

However, the reducer 67 may also be configured by engaging a spur gear or a bevel gear provided on an output shaft of an electric motor with a spur gear or bevel gear provided on the drive cam, or by passing a belt or chain between an output shaft of an electric motor and the drive cam.

In the present example, a return spring 70 is further provided between the first friction plate 30 and the second friction plate 31, and elastically biases the first friction plate 30 and the second friction plate 31 in directions to increase the gap between them. The elastic force of the return spring 70 is smaller than the elastic restoring force of the elastic member 33 of the elastic biasing member 27. In a case in which the friction engagement portion 26 is brought into the disconnected state, the action of the return spring 70 widens the distance between the first friction plate 30 and the second friction plate 31, making it possible to reliably disconnect the friction engagement portion 26.

The two-speed transmission 1 of the present example has a first mode in which the rotation transmission state switching device 8 is in the free mode and the friction engagement device 7 is in the connected mode, and a second mode in which the rotation transmission state switching device 8 is in the locked mode and the friction engagement device 7 is in the disconnected mode.

More specifically, when the two-speed transmission 1 is switched to the first mode by setting the rotation transmission state switching device 8 to the free mode and the friction engagement device 7 to the connected mode, the planetary transmission mechanism 9 enters a glued state in which the entire mechanism rotates as one unit. In this state, the torque input to the input member 4 is transmitted to the output member 5 as is without being increased.

On the other hand, when the two-speed transmission 1 is switched to the second mode by setting the rotation transmission state switching device 8 to the locked mode and the friction engagement device 7 to the disconnected mode, the torque input to the input member 4 is increased by the planetary transmission mechanism 9 and then transmitted to the output member 5. That is, in the two-speed transmission 1 of the present example, the first mode corresponds to a low reduction ratio mode in which the reduction ratio between the input member 4 and the output member 5 is small, and the second mode corresponds to a high reduction ratio mode in which the reduction ratio is larger than that in the low reduction ratio mode.

The two-speed transmission 1 of the present example passes through a reduction ratio switching mode during switching from the high reduction ratio mode (second mode) to the low reduction ratio mode (first mode). Furthermore, the two-speed transmission 1 of the present example can be switched to a neutral mode in which no torque is transmitted between the input member 4 and the output member 5, and a parking mode in which the rotation of the output member 5 is locked.

<Low Reduction Ratio Mode (First Mode)>

To switch the two-speed transmission 1 to the low reduction ratio mode, the friction engagement device 7 is switched to the connected mode, and the rotation transmission state switching device 8 is switched to the free mode.

In the present example, by rotating the drive cam 34 using the electric actuator 29, the rolling element 36 is positioned at the first bottom portion 48a of the drive cam surface 48, and the driven cam 35 is displaced in a direction in which the distance in the axial direction between the driven cam 35 and the drive cam 34 is reduced (toward the other side in the axial direction). As a result, the force of the elastic biasing member 27 pressing the piston 32 toward the one side in the axial direction is lost.

The piston 32, thrust bearing 57 and pressing member 58 are pressed toward the other side in the axial direction mainly by the elastic restoring force of the first friction plate 30 and the elastic member 33, and the piston 32 presses the first friction plate 30 or the second friction plate 31 that closest to the one side in the axial direction toward the other side in the axial direction.

As a result, the first friction plate 30 and the second friction plate 31 are pressed against each other, and by the friction engagement portion 26 being connected, the friction engagement device 7 is switched to the connected mode. As a result, the input member 4 and the rotating member 6 rotate integrally, and the sun gear 101 and the ring gear 102 rotate integrally.

When the friction engagement device 7 is switched to the connected mode, the phase in the circumferential direction of the mode selection member 73 relative to the second member 72 is adjusted at the same time, and due to this, as illustrated in FIG. 19A, the protrusion 97 pushes up the first engagement claw 91 outward in the radial direction, and also pushes up the second engagement claw 94 outward in the radial direction.

As a result, the engaging recessed portion 74 of the first member 71 disengages from the first engagement claw 91 and the second engagement claw 94, and the rotation transmission state switching device 8 switches to the free mode in which rotation of the first member 71 relative to the second member 72 is allowed regardless of the relative rotational direction between the first member 71 and the second member 72. As a result, the rotating member 6 is allowed to rotate relative to the fixed portion 10, and the sun gear 101 is allowed to rotate.

In the low reduction ratio mode, the sun gear 101, the ring gear 102, and the carrier 103 rotate in the same direction and at the same speed, and the entire planetary transmission mechanism 9 rotates as a unit, in a glued state. Therefore, the rotational torque of the input member 4 is transmitted in the order of the input member 4, the carrier 103, and the output member 5, as indicated by the thick line in FIG. 2A, and is extracted from the output member 5.

<High Reduction Ratio Mode (Second Mode)>

To switch the two-speed transmission 1 to the high reduction ratio mode, the friction engagement device 7 is switched to the disconnected mode, and the rotation transmission state switching device 8 is switched to the locked mode.

In the present example, by rotating the drive cam 34 using the electric actuator 29, the rolling element 36 is positioned on the first flat surface portion 48c of the drive cam surface 48, and the driven cam 35 is displaced in a direction (toward the one side in the axial direction) in which the distance in the axial direction between the driven cam 35 and the drive cam 34 increases. As a result, by the piston 32 of the elastic biasing member 27 being pressed toward the one side in the axial direction through the thrust bearing 57 and the pressing member 58, the elastic member 33 is elastically compressed, and the force pressing the first friction plate 30 and the second friction plate 31 against each other is lost.

Due to the action of the return spring 70, the distance between the first friction plate 30 and the second friction plate 31 widens, and the friction engagement portion 26 is disconnected, whereby the friction engagement device 7 switches to the disconnected mode. As a result, the input member 4 and the rotating member 6 rotate relative to each other, and the sun gear 101 and the ring gear 102 become capable of rotating relative to each other.

When the friction engagement device 7 is switched to the disconnected mode, the phase in the circumferential direction of the mode selection member 73 relative to the second member 72 is adjusted at the same time, and due to this, the protrusion 97 is positioned at a portion offset in the circumferential direction from the first engagement claw 91 and the second engagement claw 94, as illustrated in FIG. 19B.

As a result, the engaging recessed portions 74 of the first member 71 engage with the first engagement claw 91 and the second engagement claw 94, and the rotation transmission state switching device 8 switches to the locked mode in which rotation of the first member 71 relative to the second member 72 is prevented regardless of the relative rotation direction between the first member 71 and the second member 72. As a result, rotation of the rotating member 6 relative to the fixed portion 10 is prevented, and rotation of the sun gear 101 is prevented.

In the high reduction ratio mode, the rotational torque of the input member 4 is transmitted as illustrated by the thick line in FIG. 2B in the order of the input member 4, the ring gear 102, the rotational motion of the planetary gear 104, the orbital motion of the planetary gear 104 based on engagement with the sun gear 101 and the carrier 103, and the output member 5, and is then extracted from the output member 5. In the high reduction ratio mode, the reduction ratio between the input member 4 and the output member 5 is determined by the gear ratio between the ring gear 102 and the sun gear 101 (number of teeth of the ring gear 102/number of teeth of the sun gear 101).

In the two-speed transmission 1 of the present example, the reduction ratio between the input member 4 and the output member 5 can be switched between two stages of high and low, by switching the mode of the friction engagement device 7 and the mode of the rotation transmission state switching device 8 based on the rotational drive of one drive cam 34 by one electric actuator 29.

More specifically, for example, when the power input to the input member 4 is in a low-speed and high-torque region, the two-speed transmission 1 is switched to the high reduction ratio mode, and when the power input to the input member 4 is in a high-speed and low-torque region, the two-speed transmission 1 is switched to a low reduction ratio mode. As a result, the acceleration and high-speed performance of an electric automobile or hybrid automobile running using only an electric motor as a drive source can be made to have characteristics that are a continuation of the portion of the solid line on the left side of point P and the portion of the chain line b on the right side of P in FIG. 41, and can be made to be similar to those of a gasoline engine automobile illustrated by the dashed line c in FIG. 41.

In the two-speed transmission 1 of the present example, the mode of the friction engagement device 7 and the mode of the rotation transmission state switching device 8 are switched by the electric actuator 29 driving and rotating one drive cam 34. That is, in the two-speed transmission 1 of the present example, there is no need for a hydraulic system to control friction engagement devices such as clutches and brakes. This allows the system in electric automobiles and hybrid automobiles to be simplified, reducing costs and improving electricity consumption performance.

In a case of implementing the two-speed transmission according to the present disclosure, the mode switching of the friction engagement device and the mode switching of the rotation transmission state switching device can be performed by separate actuators.

In the present example, in order to prevent the occurrence of shift shock associated with switching from the high reduction ratio mode to the low reduction ratio mode, the output torque and rotational speed $R_s$ of the drive motor 2 and the rotational speed of the shift motor 66 are controlled, and the two-speed transmission 1 is switched to the reduction ratio switching mode. As a result, it is possible to switch from the high reduction ratio mode to the low reduction ratio mode while preventing discontinuous changes in the rotational torque of the output member 5.

<Reduction Ratio Switching Mode>

When the two-speed transmission 1 begins to switch from the high reduction ratio mode to the low reduction ratio mode, first, based on adjusting the phase in the circumferential direction of the mode selection member 73 relative to the second member 72, the protrusion 97 pushes only the second engagement claw 94 outward in the radial direction against the elastic force of the second claw biasing member 89, as illustrated in FIG. 19C.

As a result, only the first engagement claw 91 engages with the engaging recessed portions 74 of the first member 71, and the rotation transmission state switching device 8 switches to the one-way clutch mode which allows only rotation of the first member 71 relative to the second member 72 in the predetermined direction (the predetermined direction in FIG. 19C) and prevents rotation in the direction opposite to the predetermined direction.

At the same time that the rotation transmission state switching device 8 switches to the one-way clutch mode, or after the rotation transmission state switching device 8 has switched to the one-way clutch mode, the friction engagement device 7 starts to switch from the disconnected mode to the connected mode. During the friction engagement device 7 is switching from the disconnected mode to the connected mode, the rolling element 36 moves down the first inclined surface portion 48b of the drive cam surface 48 from the state illustrated in FIG. 14B to the state illustrated in FIG. 14A based on the rotation of the drive cam 34.

As the amount that the rolling element 36 rides up from the first bottom portion 48a of the drive cam surface 48 gradually decreases, the force pressing the first friction plate 30 and the second friction plate 31 against each other gradually increases (the fastening force F of the friction engagement portion 26 gradually increases). At this time, the input member 4 rotates while causing both side surfaces in the axial direction of the second friction plate 31 to slide over (come in sliding contact with) both side surfaces in the axial direction of the first friction plate 30.

When the fastening force F of the friction engagement portion 26 gradually increases during rotation of the input member 4 in the forward direction, the torque applied to the second member 72 of the rotation transmission state switching device 8 in the direction opposite to the predetermined direction gradually decreases. At this time, the rotation transmission state switching device 8 has been switched to the one-way clutch mode, and thus even though a torque may be applied to the second member 72 in the direction opposite to the predetermined direction, the second member 72 does not rotate. After the torque applied to the second member 72 in the direction opposite to the predetermined direction gradually decreases to zero, the direction of the torque applied to the second member 72 reverses (torque is applied to the second member 72 in the predetermined direction), and at that moment, rotation of the second member 72 in the predetermined direction is allowed.

<Neutral Mode>

To switch the two-speed transmission 1 to the neutral mode, the friction engagement device 7 is switched to the disconnected mode, and the rotation transmission state switching device 8 is switched to the free mode.

By rotating the driving cam 34 by the electric actuator 29, the rolling element 36 is positioned on the second flat surface portion 48g of the drive cam surface 48, and the driven cam 35 is displaced in the direction (toward the one side in the axial direction) in which the distance in the axial direction between the driven cam 35 and the drive cam 34 increases. As a result, by the piston 32 of the elastic biasing member 27 being pressed toward the one side in the axial direction through the thrust bearing 57 and the pressing member 58, the elastic member 33 is elastically compressed, and the force pressing the first friction plate 30 and the second friction plate 31 against each other is lost.

Due to the action of the return spring 70, the distance between the first friction plate 30 and the second friction plate 31 widens, and the friction engagement portion 26 is disconnected, whereby the friction engagement device 7 switches to the disconnected mode. As a result, the input member 4 and the rotating member 6 rotate relative to each other, and the sun gear 101 and the ring gear 102 become capable of rotating relative to each other.

When the friction engagement device 7 is switched to the connected mode, the phase in the circumferential direction of the mode selection member 73 relative to the second member 72 is adjusted at the same time, and due to this, as illustrated in FIG. 19A, the protrusion 97 pushes up the first engagement claw 91 outward in the radial direction, and also pushes up the second engagement claw 94 outward in the radial direction.

As a result, the engaging recessed portion 74 of the first member 71 disengages from the first engagement claw 91 and the second engagement claw 94, and the rotation transmission state switching device 8 switches to the free mode in which rotation of the first member 71 relative to the second member 72 is allowed regardless of the relative rotational direction between the first member 71 and the second member 72. As a result, the rotating member 6 is allowed to rotate relative to the fixed portion 10, and the sun gear 101 is allowed to rotate.

In the neutral mode, the input member 4 and the output member 5 rotate freely relative to each other, and no torque is transmitted between the input member 4 and the output member 5.

<Parking locked mode>

To switch the two-speed transmission 1 to the parking locked mode, the friction engagement device 7 is switched to the connected mode, and the rotation transmission state switching device 8 is switched to the locked mode.

By rotating the drive cam 34 by the electric actuator 29, the rolling element 36 is positioned at the second bottom portion 48e of the drive cam surface 48, and the driven cam 35 is displaced in a direction (toward the other side in the axial direction) in which the distance in the axial direction between the driven cam 35 and drive cam 34 is reduced. As a result, the force of the elastic biasing member 27 pressing the piston 32 toward the one side in the axial direction is lost. Then, the piston 32, the thrust bearing 57 and the pressing member 58 are pressed toward the other side in the axial direction mainly by the elastic restoring force of the first friction plate 30 and the elastic member 33, and the piston 32 presses the first friction plate 30 or the second friction plate 31 that is closest to the one side in the axial direction toward the other side in the axial direction.

As a result, the first friction plate 30 and the second friction plate 31 are pressed against each other, and by the friction engagement portion 26 being connected, the friction engagement device 7 is switched to the connected mode. As a result, the input member 4 is prevented from rotating relative to the rotating member 6, and the ring gear 102 is prevented from rotating relative to the sun gear 101.

When the friction engagement device 7 is switched to the connected mode, the phase in the circumferential direction of the mode selection member 73 relative to the second member 72 is adjusted, and at the same time, the protrusion 97 is positioned in a portion offset in the circumferential direction from the first engagement claw 91 and the second engagement claw 94, as illustrated in FIG. 19B.

As a result, the engaging recessed portions 74 of the first member 71 engage with the first engagement claw 91 and the second engagement claw 94, and the rotation transmission state switching device 8 switches to the locked mode in which rotation of the first member 71 relative to the second member 72 is prevented regardless of the relative rotation direction between the first member 71 and the second member 72. As a result, rotation of the rotating member 6 relative to the fixed portion 10 is prevented, and rotation of the sun gear 101 is prevented.

In the parking locked mode, the input member 4 and the output member 5 are locked against rotation.

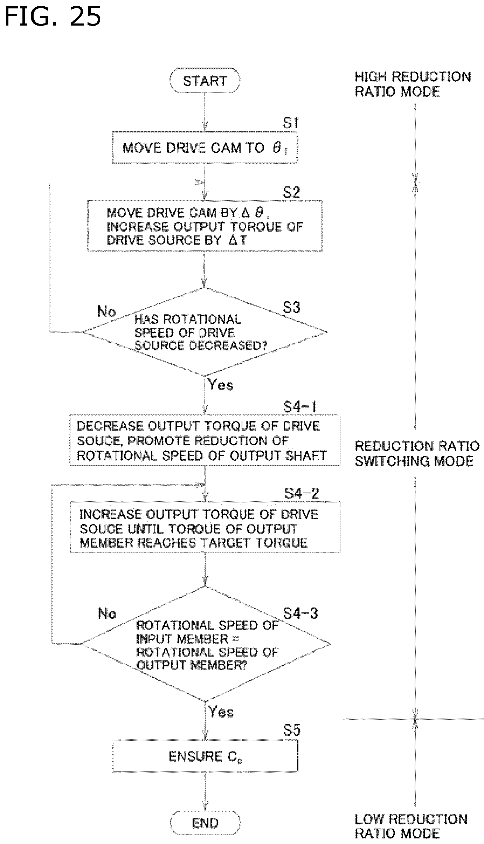

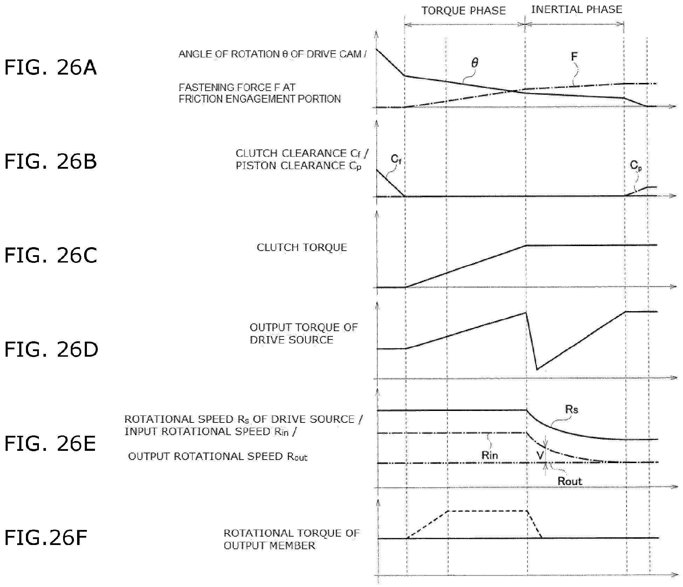

The control of the drive motor 2 and the shift motor 66 for preventing discontinuous (sudden) changes in the rotational torque of the output member 5 and preventing the occurrence of shift shock when switching from the high reduction ratio mode to the low reduction ratio mode will be described using FIGS. 25 and 26. In the following, an example will be described for a case in which the rotational torque of the output member 5 is maintained substantially constant before and after switching from the high reduction ratio mode to the low reduction ratio mode.

When switching from the high reduction ratio mode to the low reduction ratio mode is started based on conditions such as the running speed and the accelerator opening of the automobile, first, by the electric actuator 29 driving and rotating the drive cam 34, the rotation transmission state switching device 8 is switched to the one-way clutch mode, and the phase of the drive cam 34 in the rotational direction is moved to a clutch touch point $\theta_f$ (S1).

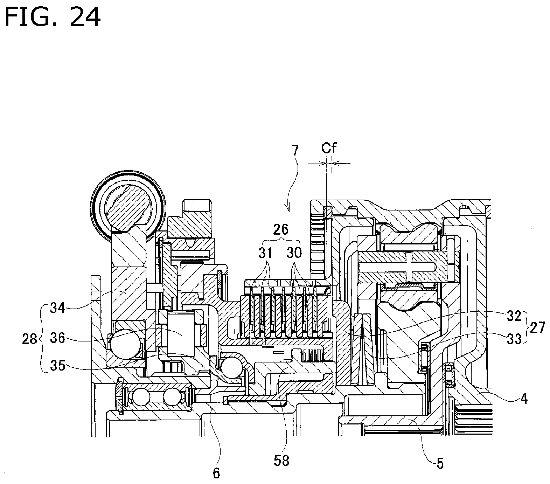

The clutch touch point $\theta_f$ is a point at which the elastic biasing member 27 starts to generate a force that presses the first friction plate 30 and the second friction plate 31 against each other. In other words, the clutch touch point $\theta_f$ is the point where the end portion on the other side in the axial direction of the piston 32 begins to come into contact with the first friction plate 30 or the second friction plate 31 that is located farthest to the one side in the axial direction, that is, the point where a clutch clearance Cf (see FIG. 24) becomes zero. In the present example, the clutch touch point $\theta_f$ is obtained in advance by a function to be described later.

When the phase in the rotational direction of the drive cam 34 is moved to the clutch touch point $\theta_f$, a transition to a torque phase (S2) occurs. In the torque phase, the electric actuator 29 rotates and drives the drive cam 34 at a predetermined rotational speed to reduce the amount that the rolling element 36 rides up from the first bottom portion 48a, thereby gradually increasing the pressing force between the first friction plate 30 and the second friction plate 31, that is, the fastening force F of the friction engagement portion 26. At the same time, the output torque of the drive motor 2 is gradually increased.

In other words, in a case in which, for example, the output torque of the drive motor 2 is maintained constant, in the torque phase, as the fastening force F of the friction engagement portion 26 increases, the torque transmitted to the friction engagement portion 26 increases, and the rotational torque of the output member 5 decreases. In the two-speed transmission 1 of the present example, the output torque of the drive motor 2 is gradually increased in accordance with the increase in the fastening force F of the friction engagement portion 26, that is, the amount of rotation of the drive cam 34, so that the rotational torque of the output member 5 can be maintained substantially constant regardless of the increase in the fastening force F of the friction engagement portion 26.

The relationship between the amount of rotation of the drive cam 34 and the amount of increase in the output torque of the drive motor 2 is determined in advance by experiment or calculation. In the present example, the rotational speed of the drive cam 34 in S2 is set to be smaller than the rotational speed of the drive cam 34 in S1. However, the rotational speed of the drive cam 34 in S2 may be the same as the rotational speed of the drive cam 34 in S1, or may be greater than the rotational speed of the drive cam 34 in S1.

More specifically, in S2, the drive cam 34 is rotated by a predetermined angle, and at the same time, the output torque of the drive motor 2 is increased by an amount corresponding to the amount of rotation of the drive cam 34. In the next step S3, it is determined whether or not the torque phase has ended.

In the torque phase, as the fastening force F of the friction engagement portion 26 increases, the clutch torque, which is the torque transmitted to the friction engagement portion 26 (passing through the friction engagement portion 26), increases, and the torque applied to the second member 72 of the rotation transmission state switching device 8 in a direction opposite to the predetermined direction gradually decreases. After the torque applied to the second member 72 in the direction opposite to the predetermined direction gradually decreases to zero, the direction of the torque applied to the second member 72 reverses (torque in the predetermined direction is applied to the second member 72), and at that moment, rotation of the second member 72 in the predetermined direction is allowed, and rotation of the sun gear 101 is allowed. When the sun gear 101 rotates, the rotational speed $R_s$ of the output shaft 11 of the drive motor 2 starts to decrease.

In the two-speed transmission 1 of the present example, in a case in which it is determined that the rotational speed $R_s$ of the output shaft 11 has decreased by a predetermined value or more based on an output signal of a rotation sensor attached to the output shaft 11 of the drive motor 2, it is determined that the torque phase has ended. This determination is made based on the rotation sensor attached to the output shaft 11 of the drive motor 2.

In a case in which it is determined that the rotational speed $R_s$ of the output shaft 11 is substantially constant, that is, the amount of decrease in the rotational speed $R_s$ of the output shaft 11 is smaller than a predetermined value and the torque phase has not ended, the process returns to S2.

In S3, in a case in which it is determined that the amount of decrease in the rotational speed $R_s$ of the output shaft 11 is equal to or greater than a predetermined value and the torque phase has ended, the process moves to an inertia phase (S4-1 to S4-3).

In the inertia phase, first, the output torque of the drive motor 2 is quickly reduced to promote a further decrease in the rotational speed $R_s$ of the output shaft 11 (S4-1). The amount of reduction in the output torque of the drive motor 2 is not particularly limited as long as that reduction can promote a further reduction in the rotational speed $R_s$ of the output shaft 11. More specifically, for example, the output torque of the drive motor 2 can be reduced to 0 or a negative value.

When the rotational speed $R_s$ of the output shaft 11 begins to decrease, the output torque of the drive motor 2 is increased so that the rotational torque of the input member 4 becomes a target torque, which is the rotational torque that should be output by the output member 5 when the two-speed transmission 1 has completed switching to the low reduction ratio mode (S4-2). In the present example, the rotational torque of the output member 5 is kept approximately constant before and after switching from the high reduction ratio mode to the low reduction ratio mode, and thus the output torque of the drive motor 2 is increased until the rotational torque of the input member 4 becomes equal to the rotational torque of the output member 5 at the start of switching from the high reduction ratio mode to the low reduction ratio mode.

The speed at which the output torque of the drive motor 2 is increased is controlled so that the rotational torque of the input member 4 can be increased to a target torque by the time that the inertia phase is completed. In the present example, the output torque of the drive motor 2 is controlled based on a friction coefficient $\mu$ between the first friction plate 30 and the second friction plate 31 and a difference (differential rotation) V between an input rotational speed $R_{in}$ and an output rotational speed $R_{out}$ of the friction engagement portion 26. The input rotational speed $R_{in}$ of the friction engagement portion 26 is the rotational speed of the first friction plate 30, and in the present example, is the same as the rotational speed of the ring gear 102 and the rotational speed of the input member 4. In addition, the output rotational speed $R_{out}$ of the friction engagement portion 26 is the rotational speed of the second friction plate 31, which is the same as the rotational speed of the sun gear 101 in the present example.

In the two-speed transmission 1 of the present example, as the rotational speed $R_s$ of the output shaft 11 decreases, the rotational speed of the input member 4 decreases, and as the differential rotation V becomes smaller, the output torque of the drive motor 2 is increased, and when the differential rotation V becomes zero, the rotational torque of the input member 4 is controlled to become a target torque. A $\mu$-V characteristic, which is the relationship between the friction coefficient $\mu$ and the differential rotation V, is obtained in advance using a function to be described later.

Next, in S4-3, it is determined whether or not the differential rotation V is 0 or not. In the two-speed transmission 1 of the present example, when the differential rotation V becomes 0 and the input rotational speed $R_{in}$ and the output rotational speed $R_{out}$ of the friction engagement portion 26 become equal, the planetary transmission mechanism 9 enters a glued state, and the rotational speed of the input member 4 and the rotational speed of the output member 5 become equal.

In the present example, it is determined whether or not the rotational speed of the input member 4 and the rotational speed of the output member 5 are equal to each other, thereby determining whether or not the differential rotation V is 0. More specifically, it is determined whether or not the difference $\Delta R$ between the rotational speed of the input member 4 and the rotational speed of the output member 5 falls within a predetermined range. This determination is made based on the output signals of the rotation sensors attached to the output shaft 11 or the input member 4 and the output member 5, respectively.

In a case in which it is determined that the difference $\Delta R$ is not within the predetermined range, that is, the differential rotation V is not 0, S4-3 is executed again after a predetermined time has elapsed.

In a case in which it is determined that the difference $\Delta R$ is within a predetermined range, that is, the differential rotation V is 0, it is determined that the inertia phase has ended, and the process proceeds to the next step S5.

In S5, the electric actuator 29 rotates the drive cam 34 to a predetermined phase in the circumferential direction, positioning the rolling element 36 at the first bottom portion 48a of the drive cam surface 48, and displaces the driven cam 35 toward the other side in the axial direction, which is a direction that reduces the distance in the axial direction between the drive cam 34 and the driven cam 35. This ensures a piston clearance Cp between the end portion on the one side in the axial direction of the pressing member 58 and the surface on the other side in the axial direction of the piston 32. In other words, the piston clearance Cp is set to 0 or more, and preferably to greater than 0.

After the rolling element 36 has been moved to the first bottom portion 48a, the process proceeds to the end. In this manner, the two-speed transmission 1 is switched from the high reduction ratio mode to the low reduction ratio mode. Thereafter, the phase in the circumferential direction of the drive cam 34 is maintained, thereby maintaining the two-speed transmission 1 in the low reduction ratio mode.

In the two-speed transmission 1 of the present example, by controlling the drive motor 2 and the shift motor 66, it is possible to prevent the rotational torque of the output member 5 from changing (suddenly), even when switching between the high reduction ratio mode and the low reduction ratio mode, thereby preventing the occurrence of shift shock. However, in order to prevent the occurrence of shift shock, the timing for controlling the output torque and rotational speed $R_s$ of the drive motor 2 and the rotation of the shift motor 66 becomes important.

For example, in a case in which the process moves to S2 and the output torque of the drive motor 2 is increased even though the phase in the rotational direction of the drive cam 34 has not yet reached the clutch touch point $\theta_f$, as illustrated by the dashed line in FIG. 26F, there is a possibility that the rotational torque of the output member 5 will inadvertently increase.

As the two-speed transmission 1 is used, the amount of wear on the first friction plate 30 and the second friction plate 31 increases, the amount of pressure required by the elastic biasing member 27 to press the first friction plate 30 or the second friction plate 31 that is closest to the one side in the axial direction toward the other side in the axial direction in order to switch the friction engagement device 7 to the connected mode increases.

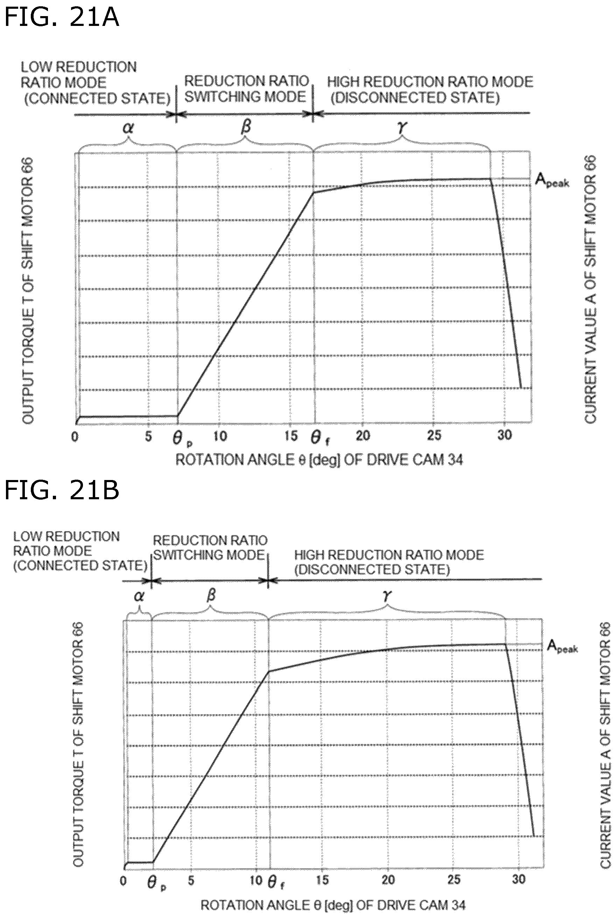

In other words, the amount of pressure required for the cam device 28 to press the piston 32 to the one side in the axial direction when the friction engagement device 7 is switched to the disconnected mode is reduced. As a result, the relationship between the rotational angle $\theta$ of the drive cam 34 and a current value A of the shift motor 66 changes from the state illustrated in FIG. 21A to the state illustrated in FIG. 21B. That is, as the amount of wear of the first friction plate 30 and the second friction plate 31 increases, the clutch touch point $\theta_f$ decreases.

FIG. 21A and FIG. 21B are graphs showing the relationship between the rotational angle $\theta$ of the drive cam 34 and the output torque T and current value A of the shift motor 66 when the friction engagement device 7 is switched from the connected mode to the disconnected mode. FIG. 21A shows the first friction plate 30 and the second friction plate 31 when they are new and not worn, and FIG. 21B shows the first friction plate 30 and the second friction plate 31 when they have been significantly worn.

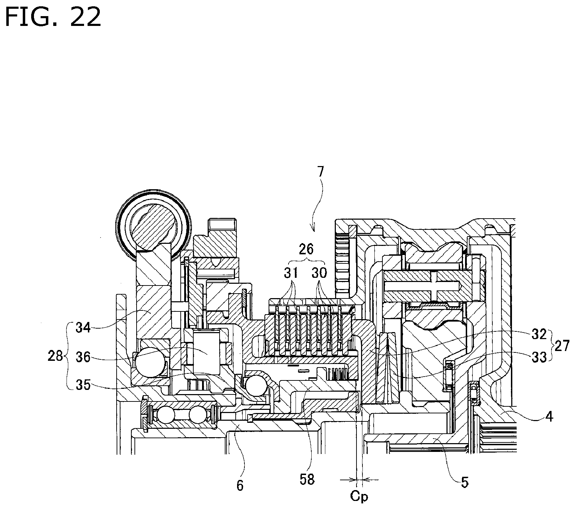

As the amount of wear of the first friction plate 30 and the second friction plate 31 increases, a piston touch point $\theta_p$ also decreases. The piston touch point $\theta_p$ is a point at which, when the drive cam 34 is rotated in a direction that switches the friction engagement portion 26 from the connected state to the disconnected state, the elastic biasing member 27 begins to be pressed in a direction that releases the force pressing the first friction plate 30 and the second friction plate 31 against each other. In other words, the piston touch point $\theta_p$ is a point at which the piston clearance Cp (see FIG. 22) begins to be generated between the end portion on the one side in the axial direction of the pressing member 58 and the surface on the other side in the axial direction of the piston 32 in a case in which the drive cam 34 is rotated in a direction that switches the friction engagement portion 26 from the disconnected state to the connected state.

The two-speed transmission 1 of the present example has a function for preventing shift shock regardless of wear of the first friction plate 30 and the second friction plate 31. More specifically, the two-speed transmission 1 of the present example has a first function of detecting the piston touch point $\theta_p$, a second function of detecting the clutch touch point $\theta_f$, and a third function of adjusting the amount of rotation of the drive cam 34 based on the piston touch point $\theta_p$ and/or the clutch touch point $\theta_f$ when switching between the high reduction ratio mode and the low reduction ratio mode.

As is apparent from FIGS. 21A and 21B, when switching the mode of the friction engagement device 7, the output torque T of the shift motor 66 and the current value A of the shift motor 66 change with the same tendency. The two-speed transmission 1 of the present example detects the piston touch point $\theta_p$ and the clutch touch point $\theta_f$ based on the current value A of the shift motor 66 when the friction engagement device 7 is switched from the connected mode to the disconnected mode.

When the friction engagement device 7 is switched to the connected mode, the rolling element 36 of the cam device 28 is located at the first bottom portion 48a of the drive cam surface 48. In this state, as illustrated in FIG. 22, a piston clearance Cp exists between the end portion on the one side in the axial direction of the pressing member 58 and the surface on the other side in the axial direction of the piston 32. The piston 32 is permitted to displace to the other side in the axial direction based on the presence of this piston clearance Cp. Therefore, the force of the elastic member 33 attempting to elastically restore the shape of the elastic member 33 causes the piston 32 to be elastically pressed toward the other side in the axial direction, and the piston 32 presses the first friction plate 30 or the second friction plate 31 that is closest to the one side in the axial direction toward the other side in the axial direction, causing the first friction plate 30 and the second friction plate 31 to be pressed against each other.

To switch the friction engagement device 7 from the connected mode to the disconnected mode, the drive cam 34 is rotated in the predetermined direction based on the energization of the shift motor 66, and the amount by which the rolling element 36 rides up from the first bottom portion 48a is increased. At this time, the current value A of shift motor 66 is approximately constant (range $\alpha$ in FIGS. 21A and 21B), except for the starting current that flows temporarily.

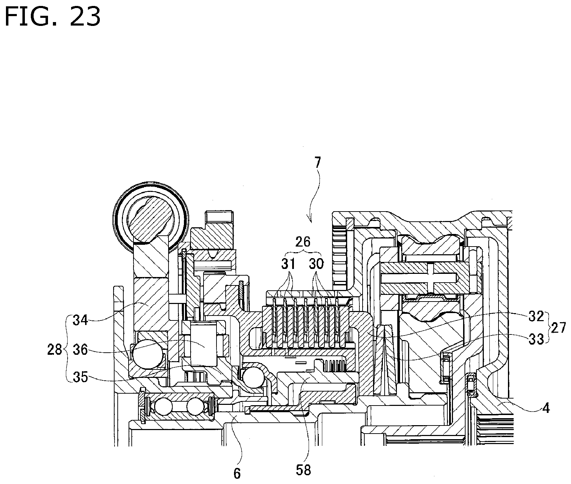

By increasing the amount that the rolling element 36 rides up from the first bottom portion 48a, the pressing member 58 is moved toward the one side in the axial direction, and as illustrated in FIG. 23, the end portion on the one side in the axial direction of the pressing member 58 comes into contact with the surface on the other side in the axial direction of the piston 32. In other words, the piston clearance Cp becomes zero.

When the drive cam 34 is further rotated and driven in the predetermined direction by the shift motor 66 from the state illustrated in FIG. 23, the piston 32 is pressed toward the one side in the axial direction by the driven cam 35, through the pressing member 58, against the elastic restoring force of the elastic member 33. In this state, a portion of the elastic restoring force of the elastic member 33 is supported by the cam device 28 through the pressing member 58 and the thrust bearing 57, and the rest is supported by the fixed portion 10 through the friction engagement portion 26 and the rotation transmission state switching device 8.

As the piston 32 is pressed toward the one side in the axial direction, the force pressing the first friction plate 30 and the second friction plate 31 against each other gradually decreases, mainly based on the elastic restoring force of the second friction plate 31 and the elastic member 33. That is, the fastening force F of the friction engagement portion 26 gradually decreases.

While the fastening force F of the friction engagement portion 26 is gradually reduced, the current value A of the shift motor 66 increases at a substantially constant rate of increase (constant gradient) (range $\beta$ in FIGS. 21A and 21B). That is, the rate of increase of the current value A in the range $\beta$ is greater than the rate of increase of the current value A in the range $\alpha$.

In the two-speed transmission 1 of the present example, by the first function, the phase (rotational angle from a reference position (for example, an initial position where the rolling element 36 is located at the bottom portion of the recessed portion)) $\theta$ in the rotational direction of the drive cam 34 when the current value A of the shift motor 66 begins to increase at an increase rate equal to or greater than a predetermined first threshold value after starting of current supply to the shift motor 66 in order to switch the friction engagement device 7 from the connected mode to the disconnected mode, is detected as the piston touch point $\theta_p$ at which the piston clearance Cp becomes 0. The first threshold value can be obtained in advance by experiment, simulation, or the like.

The rate of increase in the current value A is the amount of increase $\Delta A$ in the current value A per unit rotation angle $\Delta\theta$ of the drive cam 34. Note that when the drive cam 34 is rotated in the predetermined direction at a constant rotational speed, the increase $\Delta A$ in the current value A per unit time can also be used for the judgment.

The fastening force F of the friction engagement portion 26 gradually decreases, and at the moment when the fastening force F becomes 0, as illustrated in FIG. 24, the clutch clearance Cf begins to be generated between the end portion on the other side in the axial direction of the piston 32 and the first friction plate 30 or the second friction plate 31 that is located the farthest on the one side in the axial direction. When the clutch clearance Cf begins to be generated, almost the entire elastic restoring force of the elastic member 33 is supported by the cam device 28 through the pressing member 58 and the thrust bearing 57.

After the clutch clearance Cf begins to be generated in this manner, the current value A of the shift motor 66 increases gently and logarithmically (range $\gamma$ in FIGS. 21A and 21B). That is, the rate of increase of the current value A in the range $\gamma$ is smaller than the rate of increase of the current value A in the range $\beta$.

In the two-speed transmission 1 of the present example, by the second function, the phase $\theta$ in the rotational direction of the drive cam 34 when the rate of increase of the current value A of the shift motor 66 becomes equal to or lower than a predetermined second threshold value after the phase in the rotational direction of the drive cam 34 exceeds the piston touch point $\theta_p$ when the friction engagement device 7 is switched from the connected mode to the disconnected mode, is detected as the clutch touch point $\theta_f$ at which the clutch clearance Cf becomes 0. The second threshold value is smaller than the first threshold value. The second threshold value can be obtained in advance by experiment, simulation, or the like.

The detection of the piston touch point $\theta_p$ and the clutch touch point $\theta_f$ can be performed at any timing as long as it does not interfere with the running of the automobile equipped with the two-speed transmission 1. More specifically, the detection of the piston touch point $\theta_p$ and the clutch touch point $\theta_f$ can be implemented immediately after the ignition key is turned ON or at timing such as when the two-speed transmission 1 is switched from the low reduction ratio mode to the high reduction ratio mode like during kickdown acceleration or when the engine brake is activated.

However, in a case in which an attempt is made to implement the above operation while the automobile is running, there is a problem in that the drive cam 34 cannot be driven at an arbitrary rotational speed. Therefore, it is preferable to detect the piston touch point $\theta_p$ and the clutch touch point $\theta_f$ while the automobile is stopped, such as immediately after the ignition key is turned ON. Note that the detection of the piston touch point $\theta_p$ and the clutch touch point $\theta_f$ can also be performed at timing such as every time when the detection can be performed, or can be performed when a predetermined time has passed since the previous detection.

When switching between the high reduction ratio mode and the low reduction ratio mode, the two-speed transmission 1 of the present example adjusts the amount of rotation of the drive cam 34, which is rotated and driven by the shift motor 66 through the reducer 67, based on the piston touch point $\theta_p$ detected by the first function and/or the clutch touch point $\theta_f$ detected by the second function. More specifically, for example, in a case of maintaining the rotational torque of the output member 5 approximately constant before and after switching from the high reduction ratio mode to the low reduction ratio mode, in S1, the clutch touch point $\theta_f$ detected by the second function is used as the target value of the phase in the rotational direction of the drive cam 34.

In the two-speed transmission 1 of the present example, even in a case in which the piston touch point $\theta_p$ and the clutch touch point $\theta_f$ change from their initial positions due to wear of the first friction plate 30 and the second friction plate 31, transmission control may be performed based on the corrected piston touch point $\theta_p$ and clutch touch point $\theta_f$. Therefore, with the two-speed transmission 1 of the present example, regardless of wear of the first friction plate 30 and the second friction plate 31, the occurrence of shift shock can be prevented.

The two-speed transmission 1 of the present example has a function of, by performing mode switching between a first mode (in this example, a low reduction ratio mode) and a second mode (in this example, a high reduction ratio mode) on the condition that a predetermined learning start condition is satisfied, and by calculating the friction coefficient between the first friction plate 30 and the second friction plate 31 based on the output torque of the drive motor 2 and angular acceleration of the output shaft 11 of the drive motor 2 in the inertia phase during the mode switching, obtaining a $\mu$-V characteristic, which is the relationship between the friction coefficient and the differential rotation, which is the difference in rotational speed between the any two elements (in this example, the sun gear 101 and the ring gear 102), (executing a $\mu$-V characteristic learning method).

The two-speed transmission 1 of the present example has a function of controlling the output torque of the drive motor 2 and the magnitude of the force pressing the first friction plate 30 and the second friction plate 31 against each other (executing a transmission control method of the two-speed transmission 1) based on the $\mu$-V characteristic obtained by the learning function when switching the mode between a first mode (in this example, a low reduction ratio mode) and a second mode (in this example, a high reduction ratio mode).

The $\mu$-V characteristic of the friction engagement portion 26 changes with changes in the usage environment, such as the oil temperature of the lubricating oil and the surface temperature of the contact portion (sliding portion) between the first friction plate 30 and the second friction plate 31, as well as with deterioration over time. The two-speed transmission 1 of the present example executes the learning function to obtain the $\mu$-V characteristic of the friction engagement portion 26, provided that predetermined learning start conditions are satisfied, and when switching between the high reduction ratio mode and the low reduction ratio mode, executes, based on the $\mu$-V characteristic obtained by the learning function, the transmission control function to control the output torque of the drive motor 2 in the torque phase and the magnitude of the force pressing the first friction plate 30 and the second friction plate 31 against each other in the inertia phase, that is, the fastening force F of the friction engagement unit 26.

In the learning function of the two-speed transmission 1 of the present example, the difference V between the input rotational speed and the output rotational speed to the friction engagement portion 26 (the difference between the rotational speed of the first friction plate 30 and the rotational speed of the second friction plate 31, the differential rotation) is used as the differential rotation, which is the difference between the rotational speeds of the any two elements (in this example, the sun gear 101 and the ring gear 102).

The learning start condition can be any condition as long as the two-speed transmission 1 can be switched between the high reduction ratio mode and the low reduction ratio mode without hindering the running of the automobile equipped with the two-speed transmission 1. For example, this can be implemented when the two-speed transmission 1 is switched from a high reduction ratio mode to a low reduction ratio mode, or from a low reduction ratio mode to a high reduction ratio mode while the automobile is traveling.

The $\mu$-V characteristic learning function can be executed every time the learning function can be executed. Alternatively, the learning start condition may include a predetermined time having passed since the last execution, and/or a change in the usage environment, such as a change in the oil temperature of the lubricating oil, the surface temperature of the sliding contact area between the first friction plate 30 and the second friction plate 31, or the outside air temperature, by more than a predetermined temperature.

As for the timing of executing the learning function, assuming that a predetermined learning condition is satisfied, the learning function may be executed immediately before the mode switching between the high reduction ratio mode and the low reduction ratio mode, that is, after the execution of the learning function has begun, or the learning function can be performed immediately after the mode switching, that is, immediately after the mode switching has begun.

More specifically, the mode is switched between the high reduction ratio mode and the low reduction ratio mode so that the rotational torque and the rotational speed $R_{out}$ of the output member 5 can be maintained substantially constant before and after the mode switching. Learning of the $\mu$-V characteristic may be performed in the inertia phase during switching from the high reduction ratio mode to the low reduction ratio mode and/or during switching from the low reduction ratio mode to the high reduction ratio mode. In the following, a case will be described in which learning the $\mu$-V characteristic will be performed in the inertia phase during the switching from the high reduction ratio mode to the low reduction ratio mode.

The switching from the high reduction ratio mode to the low reduction ratio mode is started, and the phase $\theta$ in the rotational direction of the drive cam 34 moves to the clutch touch point $\theta_f$. Thereafter, as the phase $\theta$ in the rotational direction of the drive cam 34 increases, the two-speed transmission 1 passes through the torque phase and the inertia phase in that order, and is then switched to the low reduction ratio mode.

As illustrated in FIG. 26, in the torque phase, the differential rotation V does not change and is maintained constant, whereas the clutch torque $T_{cl}$ transmitted to the friction engagement portion 26 (passing through the friction engagement portion 26) increases.

In the inertia phase, the clutch torque $T_{cl}$ does not change and is maintained constant, whereas the rotational speed $R_s$ of the output shaft 11 of the drive motor 2 starts to decrease. When the rotational speed $R_s$ of the output shaft 11 decreases, the rotational speed $R_{in}$ of the input member 4 decreases, and the differential rotation V, which is the difference between the input rotational speed $R_{in}$ and the output rotational speed $R_{out}$ of the friction engagement portion 26, decreases.

It is possible to determine that the inertia phase has started when the differential rotation V begins to decrease, that is, when the amount of change dV/dt of the differential rotation V per unit time exceeds a predetermined threshold value. More specifically, in the present example, in a case in which it is determined that the rotational speed $R_s$ of the output shaft 11 of the drive motor 2 has decreased by a predetermined value or more based on the output signal of a rotation sensor attached to the output shaft 11 of the drive motor 2, it is determined that the inertia phase has started.

In the inertia phase, the clutch torque $T_{cl}$ is calculated based on the rotational torque $T_{in}$ of the input member 4 and the angular acceleration $d\omega_{in}/dt$ of the input member 4. Furthermore, the friction coefficient $\mu$ between the first friction plate 30 and the second friction plate 31 is calculated based on the clutch torque $T_{cl}$ and the clutch load $F_{cl}$, and the $\mu$-V characteristic, which is the relationship between the friction coefficient $\mu$ and the differential rotation V, is obtained.

In the two-speed transmission 1 of the present example, the clutch torque $T_{cl}$ [N·m] in the inertia phase can be calculated by the following Equation (1).
[Equation 1]

$$Tcl = \frac{\alpha}{1+\alpha}\left\{Tin - \frac{d\omega_{in}}{dt} \cdot \left(I_{in} - \frac{I_{sun}}{\alpha^2}\right)\right\} \quad \cdots \quad (1)$$

In Equation (1), $\alpha$ represents the reduction ratio of the planetary transmission mechanism 9 (=number of teeth of the sun gear 101/number of teeth of the ring gear 102). $I_{in}$ represents the inertia (moment of inertia) of a portion connected to the input member 4. The portion connected to the input member 4 is a portion that rotates integrally with the input member 4 regardless of the mode of the friction engagement device 7 and the mode of the rotation transmission state switching device 8. That is, $I_{in}$ is the inertia of a combination of the input member 4, the ring gear 102, and the plurality of first friction plates 30.

$I_{sun}$ represents the inertia of a portion connected to the sun gear 101. The portion connected to the sun gear 101 rotates integrally with the sun gear 101 when the sun gear 101 rotates, regardless of the mode of the friction engagement device 7 and the mode of the rotation transmission state switching device 8, and does not rotate when the sun gear 101 does not rotate. That is, $I_{sun}$ is the inertia of a combination of the rotating member 6, the sun gear 101, the plurality of second friction plates 31, and the first member 71.

The clutch torque $T_{cl}$ in the inertia phase can also be calculated by the following Equation (2).
[Equation 2]

$$Tcl = \mu \times Fcl \times Rcl \quad \cdots \quad (2)$$

In Equation (2), $F_{cl}$ represents the force with which the first friction plate 30 and the second friction plate 31 press against each other, that is, the clutch load. The clutch load $F_{cl}$ can be determined in advance by experiment or calculation in relation to the phase $\theta$ in the rotational direction of the drive cam 34 at the time of shipment from the factory, or at the time of shipment and/or inspection of an automobile equipped with the two-speed transmission 1.

$R_{cl}$ represents the effective radius of the friction engagement portion 26. The effective radius $R_{cl}$ may be set to 1/4 of the sum of the outer diameter and the inner diameter of the sliding contact area between the first friction plate 30 and the second friction plate 31, or may be set to a radius such that the area of an outer portion in the radial direction and the area an inner portion in the radial direction of the sliding contact area between the first friction plate 30 and the second friction plate 31 are equal.

By transforming Equation (2), the following Equation (3) may be obtained.
[Equation 3]

$$\mu = \frac{Tcl}{Fcl \times Rcl} \quad \cdots \quad (3)$$

Furthermore, by substituting Equation (1) into Equation (3), the friction coefficient $\mu$ may be expressed by the following Equation (4).
[Equation 4]

$$\mu = \frac{\alpha}{1+\alpha}\left\{Tin - \frac{d\omega_{in}}{dt} \cdot \left(I_{in} - \frac{I_{sun}}{\alpha^2}\right)\right\}/(Fcl \times Rcl) \quad \cdots \quad (4)$$

In Equation (4), the rotational torque $T_{in}$ of the input member 4 can be obtained based on the command value (control value) $T_{mot}$ of the torque generated by the drive motor 2. That is, the rotational torque $T_{in}$ of the input member 4 can be calculated by the following Equation (5).
[Equation 5]

$$Tin = \beta \times Tmot \quad \cdots \quad (5)$$

In Equation (5), $\beta$ represents the reduction ratio between the drive gear 12 and the input gear 13 (=number of teeth of the input gear 13/number of teeth of the drive gear 12).

In Equation (4), the angular acceleration $d\omega_{in}/dt$ of the input member 4 can be obtained based on the output signal of a rotational speed sensor attached to the input member 4 or the output shaft 11 of the drive motor 2. The clutch load $F_{cl}$ can be estimated according to a relationship previously determined by experiment or calculation, based on the phase $\theta$ in

the rotational direction of the drive cam 34.

As described above, in the inertia phase, the clutch torque $T_{cl}$ can be calculated based on the rotational torque $T_{in}$ of the input member 4 and the angular acceleration $d\omega_{in}/dt$ of the input member 4, and further, the friction coefficient $\mu$ between the first friction plate 30 and the second friction plate 31 can be calculated based on the clutch torque $T_{cl}$ and the clutch load $F_{cl}$.

The differential rotation V can be obtained based on output signals of rotational speed sensors attached to the input member 4 and the output member 5, respectively.

In the two-speed transmission 1 of the present example, in the inertia phase during switching from the high reduction ratio mode to the low reduction ratio mode, the friction coefficient $\mu$ and the differential rotation V are calculated at predetermined time intervals, making it possible to obtain the $\mu$-V characteristic as illustrated in FIG. 42. **The $\mu$-V characteristic is stored as a map or an equation in a memory of a controller (not illustrated).**

**In** reality, the clutch load $F_{cl}$ also changes over time due to the effects of wear of the first friction plate 30 and the second friction plate 31, deterioration of the elastic member 33 and the return spring 70, and the like. However, in the two-speed transmission 1 of the present example, as illustrated in Equations (4) and (5), the friction coefficient $\mu$ is calculated based on the clutch load $F_{cl}$ that is determined in advance by experiment or calculation at the time of shipment from the factory, or at the time of shipment and/or inspection of an automobile equipped with the two-speed transmission 1. Therefore, it is possible to obtain the $\mu$-V characteristic that includes the influence of change over time on the clutch load $F_{cl}$.

In the above explanation, a case of learning the $\mu$-V characteristic in the inertia phase during switching from the high reduction ratio mode to the low reduction ratio mode was explained; however, the $\mu$-V characteristic can also be learned during the inertia phase during switching from the low reduction ratio mode to the high reduction ratio mode.

With the transmission control function of the two-speed transmission 1 in the present example, it is possible to control the output torque of the drive motor 2 in the torque phase and the fastening force F of the friction engagement portion 26 in the inertia phase when switching between the high reduction ratio mode and the low reduction ratio mode, based on the $\mu$-V characteristic determined by the learning function, thereby making it possible to control the rotational torque of the output member 5. More specifically, in order to control the fastening force F of the friction engagement portion 26, the shift motor 66 is controlled to control the rotation of the drive cam 34.

In the two-speed transmission 1 of the present example, even in a case in which the friction coefficient $\mu$ of the friction engagement portion 26 changes due to effects such as changes in the usage environment or deterioration over time, the two-speed transmission 1 can perform transmission control based on the $\mu$-V characteristic that has been corrected for fluctuations due to these factors. Therefore, with the two-speed transmission 1 of the present example, it is possible to prevent the occurrence of shift shock, regardless of the effects of changes in the usage environment, deterioration over time, and the like on the friction coefficient $\mu$.

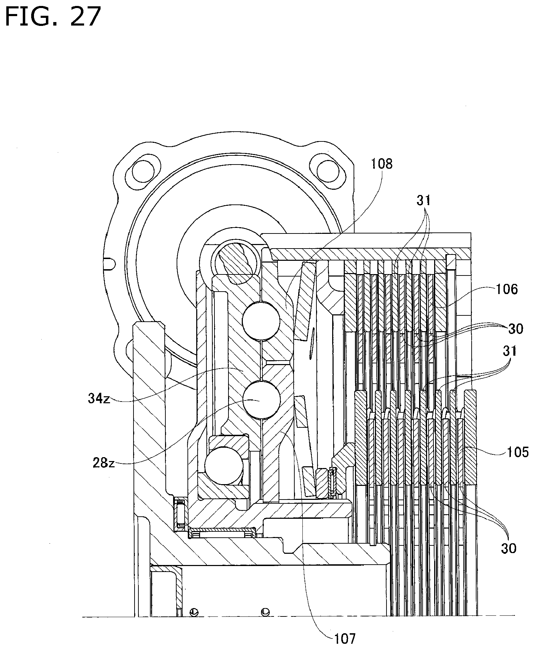

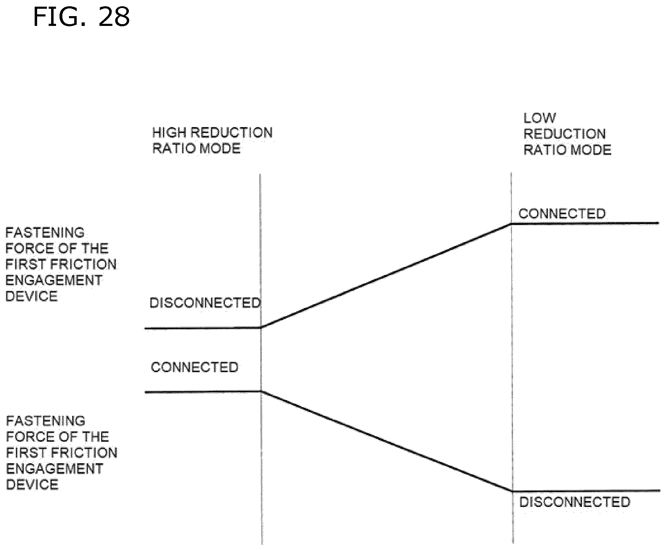

In the two-speed transmission 1 of the present example, switching from the from the high reduction ratio mode to the low reduction ratio mode is executed by passing through the reduction ratio switching mode, and thus the torque loss can be suppressed while suppressing the shift shock associated with the mode switching. The reason for this will be explained with reference to FIG. 27 and FIG. 28.

FIG. 27 illustrates a part of a two-speed transmission as a comparative example. The two-speed transmission of the comparative example includes a first friction engagement device 105 that switches whether or not relative rotation will be possible between the input member 4 and the rotating member 6, in other words, whether or not relative rotation will be possible between the ring gear 102 and the sun gear 101, and a second friction engagement device 106 that switches whether or not rotation will be possible of the rotating member 6 relative to the fixed portion 10, in other words, whether or not the sun gear 101 will be able to rotate. In other words, the two-speed transmission of the comparative example employs the second friction engagement device 106, which switches modes by pressing or separating the first friction plate 30 and the second friction plate 31, instead of the rotation transmission state switching device 8 of the two-speed transmission of the present example.

In the comparative example, a drive cam 34z of a cam device 28z is rotationally driven by an electric actuator, and the mode of the first friction engagement device 105 and the mode of the second friction engagement device 106 are switched based on the displacement in the axial direction of a first driven cam 107 and a second driven cam 108. The first driven cam 107 and the second driven cam 108 are displaced in different phases with the rotation of the drive cam 34z (they are displaced (forward and backward) in opposite directions in the axial direction).

In the two-speed transmission of the comparative example, during switching from a high reduction ratio mode with a large reduction ratio to a low reduction ratio mode with a small reduction ratio, as illustrated in FIG. 28, the fastening force of the first friction engagement device 105 gradually increases and the fastening force of the second friction engagement device 106 gradually decreases. Therefore, when switching from the high reduction ratio mode to the low reduction ratio mode, in a case in which the fastening force of the second friction engagement device 106 gradually decreases and becomes insufficient, the sun gear 101 is dragged by the revolution of the planetary gear 104, causing a loss of torque between the rotating member 6 and the fixed portion 10.

In the two-speed transmission of the comparative example, as the fastening force of the first friction engagement device 105 gradually increases, the torque applied to the sun gear 101 in the direction opposite to the predetermined direction gradually decreases to zero, and then the direction of the torque applied to the sun gear 101 reverses. However, in the two-speed transmission of the comparative example, at the moment when the direction of the torque applied to the sun gear 101 is reversed and the orbital direction of the planetary gear 104 and the rotational direction of the sun gear 101 coincide with each other, the fastening force of the second friction engagement device 106 cannot be made sufficiently large. As a result, the sun gear 101 is dragged relative to the fixed portion 10, causing a loss of torque between the sun gear 101 and the fixed portion 10.

In the two-speed transmission 1 of the present example, in order to switch from the high reduction ratio mode to the low reduction ratio mode based on the rotation of the drive cam 34, the rotation transmission state switching device 8 is set to the one-way clutch mode before the friction engagement device 7 begins to switch from the disconnected mode to the connected mode. Therefore, in order to switch the friction engagement device 7 from the disconnected mode to the connected mode, the fastening force F of the friction engagement portion 26 is gradually increased, so that at the moment when the direction of the torque applied to the sun gear 101 is reversed, the sun gear 101 is allowed to rotate in the predetermined direction. Therefore, it is possible to suppress torque loss in the two-speed transmission 1 while suppressing shift shock that accompanies mode switching.

In the reduction ratio switching mode, the reduction ratio between the input member 4 and the output member 5 is the same as the reduction ratio in the high reduction ratio mode when the fastening force F of the friction engagement portion 26 is small enough that no torque loss occurs at the contact areas between both side surfaces in the axial direction of the first friction plate 30 and both side surfaces in the axial direction of the second friction plate 31. On the other hand, when the fastening force F of the friction engagement portion 26 is increased to a magnitude sufficient to transmit torque without causing slippage at the contact areas between both side surfaces in the axial direction of the first friction plate 30 and both side surfaces in the axial direction of the second friction plate 31, the reduction ratio is the same as the reduction ratio in the low reduction ratio mode, that is, 1.

In a state in which the fastening force F of the friction engagement portion 26 is such that slippage occurs at the contact areas between both side surfaces in the axial direction of the first friction plate 30 and both side surfaces in the axial direction of the second friction plate 31, the reduction ratio between the input member 4 and the output member 5 becomes a value that corresponds to the magnitude of the input torque, the rotational speed, and the like.

When the input member 4 is in a state of rotating in the forward direction and switching is being performed from the high reduction ratio mode to the reduction ratio switching mode, a torque is applied to the second member 72 of the rotation transmission state switching device 8 in the direction opposite to the predetermined direction. Here, in the rotation transmission state switching device 8, rotation of the second member 72 in the direction opposite to the predetermined direction is prevented even during switching from the locked mode to the one-way clutch mode. That is, the reduction ratio between the input member 4 and the output member 5 during switching from the high reduction ratio mode to the reduction ratio switching mode is the same as the reduction ratio in the high reduction ratio mode.

In a case in which the input member 4 is rotating in the forward direction and switching is being performed from the reduction ratio switching mode to the low reduction ratio mode, a torque is applied to the second member 72 of the rotation transmission state switching device 8 in the predetermined direction. Here, in the rotation transmission state switching device 8, rotation of the second member 72 in the predetermined direction is allowed even during switching from the one-way clutch mode to the free mode.

In a case in which the input member 4 rotates in the reverse direction, that is, when an automobile equipped with the two-speed transmission 1 of the present example is moving backwards, the vehicle seldom travels at high speed. Therefore, in a case in which the input member 4 is rotating in the reverse direction, by switching the friction engagement device 7 to the one-way clutch mode as in the case of rotation in the forward direction when switching from the high reduction ratio mode to the low reduction ratio mode, at the moment when the direction of the torque applied to the sun gear 101 is reversed, there is little need to switch to the reduction ratio change mode that allows the sun gear 101 to rotate.

Even in a case in which the input member 4 rotates in the forward direction, the vehicle is mainly in a decelerating state when switching from the low reduction ratio mode to the high reduction ratio mode. In this case, power is not transmitted from the input member 4 to the output member 5, and thus there is little need to switch the two-speed transmission 1 to the reduction ratio switching mode.

With the two-speed transmission 1 of the present example, it is possible to ensure good torque transmission efficiency. The reason for this will be explained in the following.

When the cam device 28 is in a state of generating a pressing force, that is, a state in which the driven cam 35 presses the piston 32 toward the one side in the axial direction through the thrust bearing 57 and the pressing member 58 (the state illustrated in FIG. 2B), a force directed toward the one side in the axial direction is applied to the thrust bearing 57. In addition, a reaction force caused by the driven cam 35 pressing the piston 32 toward the one side in the axial direction is applied to the radial bearing 38 toward the other side in the axial direction through the rolling elements 36 and the drive cam 34.

The raceway ring 59a on the one side in the axial direction of the thrust bearing 57 is supported by the rotating member 6 through the pressing member 58 and the piston 32, and the raceway ring 59b on the other side in the axial direction is supported by the fixed portion 10 through the cam device 28, the angular ball bearing 39, and the tubular member 37. In addition, the inner ring 42 of the radial bearing 38 is externally fitted and fixed to the rotating member 6, and the outer ring 43 is supported by the drive cam 34 of the cam device 28 through the tubular member 37 and the angular ball bearing 39.

In the two-speed transmission 1 of the present example, when the cam device 28 is in a state of generating a pressing force, that is, in a state in which the piston 32 is pressed toward the one side in the axial direction, the axial dimension of the elastic member 33 elastically contracts, and the force pressing the first friction plate 30 and the second friction plate 31 against each other is released and the friction engagement device 7 is disconnected, the rotation transmission state switching device 8 enters the locked mode. In the high reduction ratio mode in which the friction engagement device 7 is disconnected and the rotation transmission state switching device 8 is switched to the locked mode, the relative rotation of the rotating member 6 with respect to the fixed portion 10 is prevented.

In this state, the raceway ring 59a on the one side in the axial direction and the raceway ring 59b on the other side in the axial direction of the thrust bearing 57 do not rotate relative to each other, and the inner ring 42 and the outer ring 43 of the radial bearing 38 do not rotate relative to each other. In short, in a state in which an axial force (left and right direction in FIG. 2B) is applied to the thrust bearing 57 and the radial bearing 38 and the rolling resistance becomes large, the raceway ring 59a on the one side in the axial direction and the raceway ring 59b on the other side in the axial direction of the thrust bearing 57 do not rotate relative to each other, and the inner ring 42 and the outer ring 43 of the radial bearing 38 do not rotate relative to each other. Therefore, torque loss in the thrust bearing 57 and the radial bearing 38 can be prevented.

The pressing force generated by the cam device 28 is applied from the driven cam 35 through the pressing member 58, the thrust bearing 57, the piston 32, and the elastic member 33 to the rotating member 6 in a direction toward the one side in the axial direction. In response to this, the reaction force generated by the cam device 28 generating the pressing force is applied from the drive cam 34 through the radial bearing 38 to the rotating member 6 in a direction toward the other side in the axial direction. In this way, the forces in the axial direction generated by the cam device 28 generating the pressing force are cancelled out within the rotating member 6.

When the rotation transmission state switching device 8 is switched to the free mode and relative rotation of the rotating member 6 with respect to the fixed portion 10 is allowed (the state illustrated in FIG. 2A), the friction engagement device 7 is connected and the cam device 28 does not generate a pressing force. In this state, no force in the axial direction (left and right direction in FIG. 2A) is applied to the thrust bearing 57 and the radial bearing 38 due to the pressing force generated by the cam device 28, so the rolling resistance of the thrust bearing 57 and the radial bearing 38 does not become unnecessarily large, and torque loss does not become excessively large.

In the two-speed transmission 1 of the present example, except for a short period of time during mode switching, the thrust bearing 57 and the radial bearing 38 do not rotate in a state that the force in the axial direction caused by the pressing force generated by the cam device 28 is applied and the rolling resistance becomes large. Therefore, it is possible to prevent excessive torque loss from occurring in the thrust bearing 57 and the radial bearing 38, and the torque transmission efficiency of the two-speed transmission 1 can be ensured favorably.

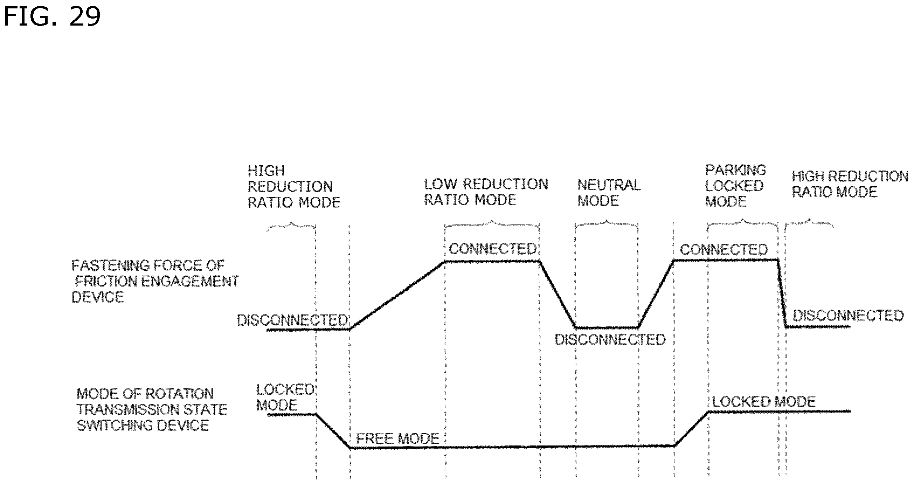

However, the two-speed transmission of the present disclosure may also be applied to a structure that does not have a one-way clutch mode, that is, that includes a rotation transmission state switching device that has only a free mode and a locked mode. In a modification such as this, when switching from the high reduction ratio mode to the low reduction ratio mode, as illustrated in FIG. 29, the rotation transmission state switching device is switched from the locked mode to the free mode, and then the friction engagement device is switched from the disconnected mode to the connected mode.

[Second Example]

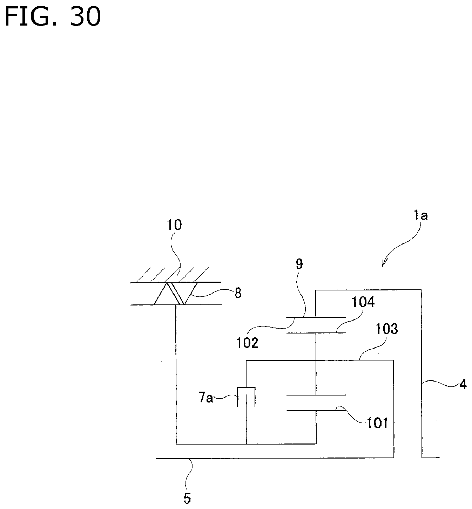

FIG. 30 illustrates a second example of an embodiment according to the present disclosure. A two-speed transmission 1a of the present example is different from the two-speed transmission 1 of the first example only in the arrangement of a friction engagement device 7a. More specifically, in the present example, the friction engagement device 7a is arranged between the sun gear 101 and the carrier 103.

In the two-speed transmission 1a of the present example, when the rotation transmission state switching device 8 is set to free mode and the friction engagement device 7a is set to the connected mode, the two-speed transmission 1a is switched to the first mode, and the planetary transmission mechanism 9 is placed in a glued state in which the entirety rotates as one unit. That is, the torque input to the input member 4 is transmitted to the output member 5 as is without being increased.

In contrast, when the two-speed transmission 1a is switched to the second mode by setting the rotation transmission state switching device 8 to the locked mode and the friction engagement device 7a to the disconnected mode, the torque input to the input member 4 is increased by the planetary transmission mechanism 9 and then transmitted to the output member 5. More specifically, the rotational torque of the input member 4 is transmitted in the following order:

the input member 4, the ring gear 102, rotational motion of the planetary gear 104, orbital motion of the planetary gear 104 based on engagement with the sun gear 101, the carrier 103, and the output member 5, and is extracted from the output member 5.

**In** the present example, the first mode corresponds to a low reduction ratio mode in which the reduction ratio between the input member 4 and the output member 5 is small, and the second mode corresponds to a high reduction ratio mode in which the reduction ratio is larger than that in the low reduction ratio mode.

**In** the two-speed transmission 1a of the present example as well, the μ-V characteristic can be obtained by determining the friction coefficient μ and the differential rotation V at predetermined time intervals in the inertia phase during mode switching between the high reduction ratio mode and the low reduction ratio mode. In the two-speed transmission 1a of the present example, the friction coefficient μ can be calculated by the following Equation (6).

[Equation 6]

$$\mu = \alpha \left\{ Tin - \frac{d\omega_{in}}{dt} \cdot \left( I_{in} - \frac{I_{sun}}{\alpha^2} \right) \right\} / (Fcl \times Rcl) \quad \cdot \ \cdot \ \cdot \quad (6)$$

In the two-speed transmission 1a of the present example, when switching between the high reduction ratio mode and the low reduction ratio mode, the output torque of the drive motor 2 in the torque phase and the fastening force F of the friction engagement portion 26 in the inertia phase can be controlled based on the μ-V characteristic determined by the learning function, and the occurrence of shift shock can be prevented regardless of the effects on the friction coefficient μ due to changes in the usage environment, deterioration over time, and the like. The configuration and the effects of the other parts of the second example are similar to those of the first example.

[Third Example]

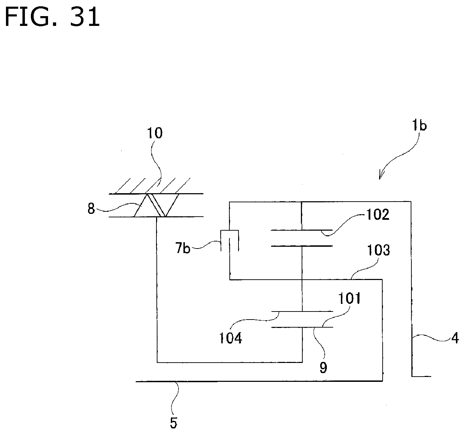

FIG. 31 illustrates a third example of an embodiment according to the present disclosure. The two-speed transmission 1b of the present embodiment is also different from the two-speed transmission 1 of the first example and the two-speed transmission 1a of the second example only in the arrangement of a friction engagement device 7b. More specifically, in the present example, the friction engagement device 7b is arranged between the ring gear 102 and the carrier 103.

When the two-speed transmission 1b of the present example is switched to the first mode, the planetary transmission mechanism 9 is in a glued state, and the torque input to the input member 4 is transmitted to the output member 5 as is without being increased. **In** contrast to this, when the two-speed transmission 1b is switched to the second mode, the torque input to the input member 4 is increased by the planetary transmission mechanism 9 and then transmitted to the output member 5b.

**In** the two-speed transmission 1b of the present example, as well, the μ-V characteristic can be obtained by determining the friction coefficient μ and the differential rotation V at predetermined time intervals in the inertia phase during mode switching between the high reduction ratio mode, which is the second mode, and the low reduction ratio mode, which is the first mode. In the two-speed transmission 1b of the present example, the friction coefficient μ can be calculated by the following Equation (7).

[Equation 7]

$$\mu = \left\{ Tin - \frac{d\omega_{in}}{dt} \cdot \left( I_{in} - \frac{I_{sun}}{\alpha^2} \right) \right\} / (Fcl \times Rcl) \quad \cdot \ \cdot \ \cdot \quad (7)$$

The configuration and the effects of the other parts of the third example are similar to those of the first and second examples.

[Fourth Example]

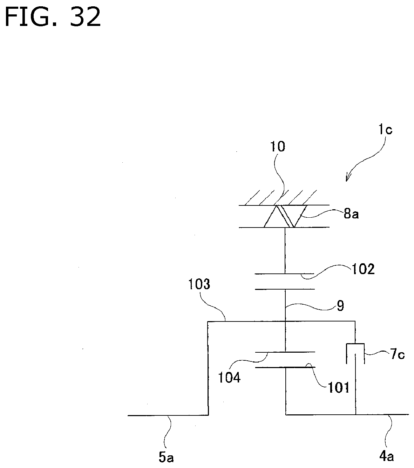

FIG. 32 illustrates a fourth example of an embodiment according to the present disclosure. In the two-speed transmission 1c of the present example, the input member 4a is connected to the sun gear 101 of the planetary transmission mechanism 9 so as to be capable of transmitting torque, and the output member 5a is connected to the carrier 103 so as to be capable of transmitting torque. The friction engagement device 7c is arranged between the sun gear 101 and the carrier 103, and the rotation transmission state switching device 8a is arranged between the fixed portion 10 and the ring gear 102.

When the two-speed transmission 1c of the present example is switched to the first mode by setting the rotation transmission state switching device 8 to the free mode and the friction engagement device 7c to the connected mode, the planetary transmission mechanism 9 is placed in a glued state. That is, the torque input to the input member 4a is transmitted as is to the output member 5a.

When the two-speed transmission 1c is switched to the second mode by setting the rotation transmission state switching device 8a to the locked mode and the friction engagement device 7c to the disconnected mode, the torque input to the input member 4a is increased by the planetary transmission mechanism 9 and then transmitted to the output member 5a. More specifically, the rotational torque of the input member 4a is transmitted in the following order: the input member 4a, the sun gear 101, the rotational motion of the planetary gear 104, the orbital motion of the planetary gear 104 based on engagement with the ring gear 102, the carrier 103, and the output member 5a, and is extracted from output member 5a.

In the two-speed transmission 1c of the present example, as well, the μ-V characteristic can be obtained by determining the friction coefficient μ and the differential rotation V at predetermined time intervals in the inertia phase during switching from the high reduction ratio mode, which is the second mode, to the low reduction ratio mode, which is the first mode. In the two-speed transmission 1c of the present example, the friction coefficient μ can be calculated by the following Equation (8).

[Equation 8]

$$\mu = \left\{Tin - \frac{d\omega_{in}}{dt}\left(I_{in} - I_{ring} \cdot \alpha^2\right)\right\}/(Fcl \times Rcl) \quad \cdot \cdot \cdot \quad (8)$$

In Equation (8), $I_{ring}$ represents the inertia of a portion connected to the ring gear 102. The portion connected to the ring gear 102 rotates integrally with the ring gear 102 when the ring gear 102 rotates, regardless of the mode of the friction engagement device 7c and the mode of the rotation transmission state switching device 8a, and does not rotate when the ring gear 102 does not rotate. The configuration and the effects of the other parts of the fourth example are similar to those of the first example.

[Fifth Example]

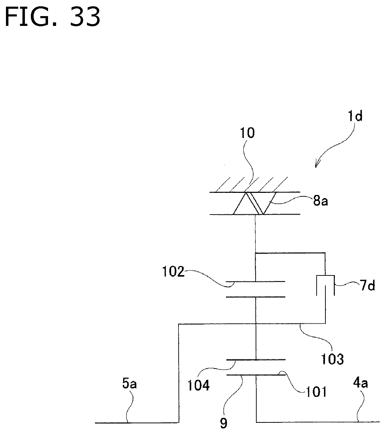

FIG. 33 illustrates a fifth example of an embodiment according to the present disclosure. The two-speed transmission 1d of the present example is different from the two-speed transmission 1c of the fourth example only in the arrangement of a friction engagement device 7d. More specifically, in the present example, the friction engagement device 7d is arranged between the ring gear 102 and the carrier 103.

In the two-speed transmission 1d of the present example, as well, the μ-V characteristic can be obtained by calculating the friction coefficient μ and the differential rotation V at predetermined time intervals in the inertia phase during mode switching between the high reduction ratio mode, which is the second mode, and the low reduction ratio mode, which is the first mode. In the two-speed transmission 1d of the present example, the friction coefficient μ can be calculated by the following Equation (9).

[Equation 9]

$$\mu = \frac{1}{\alpha}\left\{Tin - \frac{d\omega_{in}}{dt}\left(I_{in} - I_{ring} \cdot \alpha^2\right)\right\}/(Fcl \times Rcl) \quad \cdot \cdot \cdot \quad (9)$$

The configuration and the effects of the other parts of the fifth example are similar to those of the first and fourth examples.

[Sixth Example]

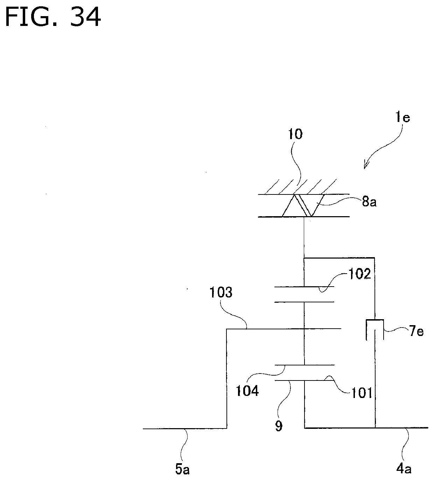

FIG. 34 illustrates a sixth example of an embodiment according to the present disclosure. The two-speed transmission 1e of the present example is different from the two-speed transmission 1c of the fourth example and the two-speed transmission 1d of the fifth example only in the arrangement of a friction engagement device 7e. More specifically, in the present example, the friction engagement device 7e is arranged between the sun gear 101 and the ring gear 102.

In the two-speed transmission 1e of the present example, as well, the μ-V characteristic can be obtained by determining the friction coefficient μ and the differential rotation V at predetermined time intervals in the inertia phase during mode switching between the high reduction ratio mode, which is the second mode, and the low reduction ratio mode, which is the first mode. In the two-speed transmission 1e of the present example, the friction coefficient μ can be calculated by the following Equation (10).

[Equation 10]

$$\mu = \frac{1}{1+\alpha}\left\{Tin - \frac{d\omega_{in}}{dt}\left(I_{in} - I_{ring}\cdot\alpha^2\right)\right\}/(Fcl \times Rcl) \quad \cdot\ \cdot\ \cdot \quad (1\ 0)$$

The configuration and the effects of the other parts of the sixth example are similar to those of the first and fourth examples.

[Seventh Example]

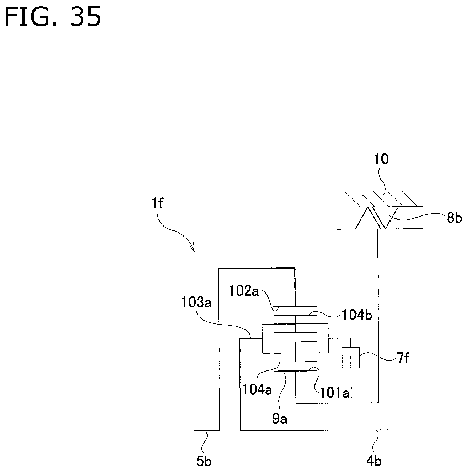

FIG. 35 illustrates a seventh example of an embodiment according to the present disclosure. In the two-speed transmission 1f of the present example, the planetary speed change mechanism 9a is configured by a double-pinion type planetary gear mechanism. That is, a planetary transmission mechanism 9a includes a plurality of planetary gears 104a on the inner diameter side engaged with a sun gear 101a and a plurality of planetary gears 104b on the outer diameter side engaged with a ring gear 102a, and the planetary gears 104a on the inner diameter side and the planetary gears 104b on the outer diameter side engage with each other and are rotatably supported by a carrier 103a.

In the present example, the input member 4b is connected to the carrier 103a so as to be able to transmit torque, and the output member 5b is connected to the ring gear 102a so as to be able to transmit torque. The friction engagement device 7f is arranged between the sun gear 101a and the carrier 103a, and the rotation transmission state switching device 8b is arranged between the fixed portion 10 and the sun gear 101a.

When the two-speed transmission 1f of the present example is switched to the first mode by setting the rotation transmission state switching device 8b to the free mode and the friction engagement device 7f to the connected mode, the planetary transmission mechanism 9a is placed in a glued state. That is, the torque input to the input member 4b is transmitted as is to the output member 5b.

When the two-speed transmission 1f is switched to the second mode by setting the rotation transmission state switching device 8b to the locked mode and the friction engagement device 7f to the disconnected mode, the torque input to the input member 4b is increased by the planetary speed change mechanism 9a and then transmitted to the output member 5b. More specifically, the rotational torque of the input member 4b is transmitted in the following order: the input member 4b, the carrier 103a, the orbital motion of the planetary gears 104a, 104b, the rotational motion of the inner diameter side planetary gear 104a based on engagement with the sun gear 101a, the rotational motion of the outer diameter side planetary gear 104b, the ring gear 102a, and the output member 5b, and is then extracted from output member 5b.

In the two-speed transmission 1f of the present example, as well, the $\mu$-V characteristic can be obtained by calculating the friction coefficient $\mu$ and the differential rotation V at predetermined time intervals in the inertia phase during mode switching between the high reduction ratio mode, which is the second mode, and the low reduction ratio mode, which is the first mode. In the two-speed transmission 1f of the present example, the friction coefficient $\mu$ can be calculated by the following Equation (11).

[Equation 11]

$$\mu = \alpha\left\{Tin - \frac{d\omega_{in}}{dt}\cdot\left(I_{in} - \frac{(1-\alpha)^2}{\alpha^2}\cdot I_{sun}\right)\right\}/(Fcl \times Rcl) \quad \cdot\ \cdot\ \cdot \quad (1\ 1)$$

The configuration and the effects of the other parts of the seventh example are similar to those of the first example.

[Example 8]

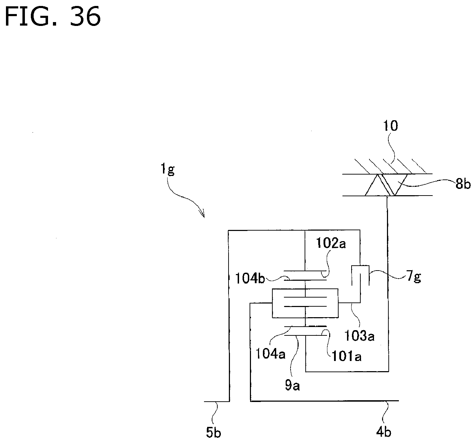

FIG. 36 illustrates an eighth example of an embodiment according to the present disclosure. A two-speed transmission 1g of the present example is different from the two-speed transmission 1f of the seventh example only in the arrangement of a friction engagement device 7g. More specifically, in the present example, the friction engagement device 7g is arranged between the ring gear 102a and the carrier 103a.

In the two-speed transmission 1g of the present example, as well, the $\mu$-V characteristic can be obtained by calculating the friction coefficient $\mu$ and the differential rotation V at predetermined time intervals in the inertia phase during mode switching between the high reduction ratio mode, which is the second mode, and the low reduction ratio mode, which is the first mode. In the two-speed transmission 1g of the present example, the friction coefficient $\mu$ can be calculated by the following Equation (12).

[Equation 12]

$$\mu = \left\{Tin - \frac{d\omega_{in}}{dt}\cdot\left(I_{in} - \frac{(1-\alpha)^2}{\alpha^2}\cdot I_{sun}\right)\right\}/(Fcl \times Rcl) \quad \cdot\ \cdot\ \cdot \quad (1\ 2)$$

The remaining configuration and the effects of the eighth example are similar to those of the first and seventh examples.

[Ninth Example]

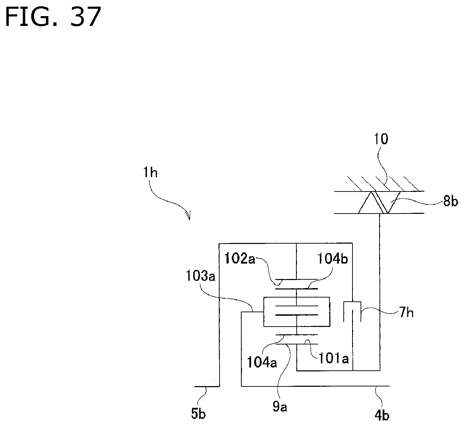

FIG. 37 illustrates a ninth example of an embodiment according to the present disclosure. A two-speed transmission 1h of the present example is different from the two-speed transmission 1f of the seventh embodiment and the two-speed transmission 1g of the eighth embodiment only in the arrangement of a friction engagement device 7h. More specifically, in the present example, the friction engagement device 7h is arranged between the sun gear 101a and the ring gear 102a.

In the two-speed transmission 1h of the present example, as well, the μ-V characteristic can be obtained by calculating the friction coefficient μ and the differential rotation V at predetermined time intervals in the inertia phase during mode switching between the high reduction ratio mode, which is the second mode, and the low reduction ratio mode, which is the first mode. In the two-speed transmission 1h of the present example, the friction coefficient μ can be calculated by the following Equation (13).

[Equation 13]

$$\mu = \frac{\alpha}{1-\alpha}\left\{Tin - \frac{d\omega_{in}}{dt} \cdot \left(I_{in} - \frac{(1-\alpha)^2}{\alpha^2} \cdot I_{sun}\right)\right\}/(Fcl \times Rcl) \quad \cdot \cdot \cdot \quad (1\,3)$$

The configuration and the effects of the other parts of the ninth example are similar to those of the first and seventh examples.

[Tenth Example]

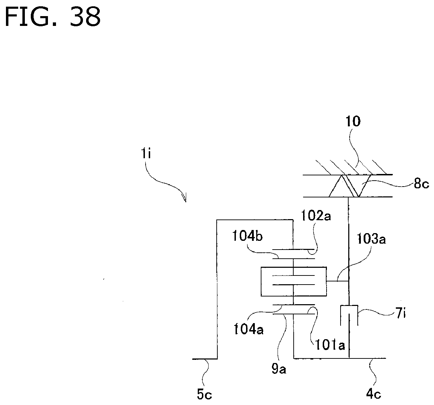

FIG. 38 illustrates a tenth example of an embodiment according to the present disclosure. In a two-speed transmission 1i of the present example, the input member 4c is connected to the sun gear 101a of the planetary transmission mechanism 9a so as to be capable of transmitting torque, and the output member 5c is connected to the ring gear 102a so as to be capable of transmitting torque. A friction engagement device 7i is arranged between the sun gear 101a and the carrier 103a, and the rotation transmission state switching device 8c is arranged between the fixed portion 10 and the carrier 103a.

When the two-speed transmission 1i of the present example is switched to the first mode by setting the rotation transmission state switching device 8c to the free mode and the friction engagement device 7i to the connected mode, the planetary transmission mechanism 9a is placed in a glued state. That is, the torque input to the input member 4c is transmitted as is to the output member 5c.

In contrast to this, when the two-speed transmission 1i is switched to the second mode by setting the rotation transmission state switching device 8c to the locked mode and the friction engagement device 7i to the disconnected mode, the torque input to the input member 4c is increased by the planetary transmission mechanism 9a and then transmitted to the output member 5c. More specifically, the rotational torque of the input member 4c is transmitted in the following order: the input member 4c, the sun gear 101a, the rotational motion of the inner diameter side planetary gear 104a, the rotational motion of the outer diameter side planetary gear 104b, the ring gear 102a, and the output member 5c, and is then extracted from the output member 5c.

In the two-speed transmission 1i of the present example, as well, the μ-V characteristic can be obtained by determining the friction coefficient μ and the differential rotation V at predetermined time intervals in the inertia phase during mode switching between the high reduction ratio mode, which is the second mode, and the low reduction ratio mode, which is the first mode. In the two-speed transmission 1i of the present example, the friction coefficient μ can be calculated by the following Equation (14).

[Equation 14]

$$\mu = (1-\alpha)\left\{Tin - \frac{d\omega_{in}}{dt} \cdot \left(I_{in} - \frac{\alpha^2}{(1-\alpha)^2} \cdot I_{carrier}\right)\right\}/(Fcl \times Rcl) \quad \cdot \cdot \cdot \quad (1\,4)$$

In Equation (14), $I_{carrier}$ represents inertia of a portion connected to the carrier 103a. The portion connected to the carrier 103a rotates integrally with the carrier 103a when the carrier 103a rotates, regardless of the mode of the friction engagement device 7i and the mode of the rotation transmission state switching device 8c, and does not rotate when the carrier 103a does not rotate. The configuration and the effects of the other parts of the tenth example are similar to those of the first and seventh examples.

[Eleventh Example]

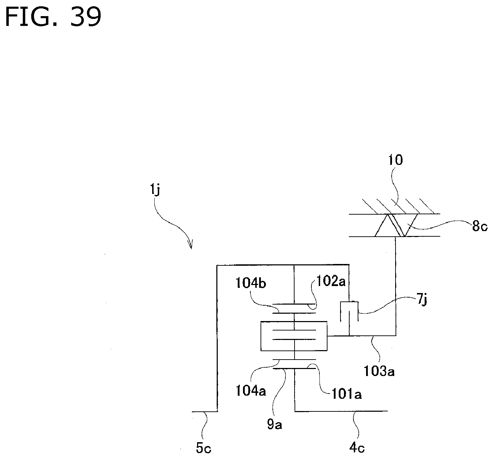

FIG. 39 illustrates an eleventh example of an embodiment according to the present disclosure. A two-speed transmission 1j of the present example is different from the two-speed transmission 1i of the tenth embodiment only in the arrangement of a friction engagement device 7j. More specifically, in the present example, the friction engagement device 7j is arranged between the ring gear 102a and the carrier 103a.

In the two-speed transmission 1j of the present example as well, the μ-V characteristic can be obtained by determining the friction coefficient μ and the differential rotation V at predetermined time intervals in the inertia phase during mode switching between the high reduction ratio mode, which is the second mode, and the low reduction ratio mode, which is the first mode. In the two-speed transmission 1j of the present example, the friction coefficient μ can be calculated by the following Equation (15).

[Equation 15]

$$\mu = \frac{1-\alpha}{\alpha}\left\{Tin - \frac{d\omega_{in}}{dt}\cdot\left(I_{in} - \frac{\alpha^2}{(1-\alpha)^2}\cdot I_{carrier}\right)\right\}/(Fcl \times Rcl) \quad \cdot\;\cdot\;\cdot \quad (1\;5)$$

The configuration and the effects of the other parts of the eleventh example are similar to those of the first and tenth examples.

[Twelfth Example]

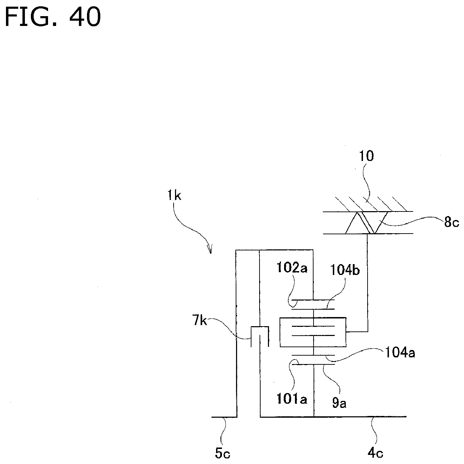

FIG. 40 illustrates a twelfth example of an embodiment according to the present disclosure. A two-speed transmission 1k of the present example is different from the two-speed transmission 1i of the tenth embodiment and the two-speed transmission 1j of the eleventh embodiment only in the arrangement of a friction engagement device 7k. More specifically, in the present example, the friction engagement device 7k is arranged between the sun gear 101a and the ring gear 102a.

In the two-speed transmission 1k of the present example, as well, the μ-V characteristic can be obtained by calculating the friction coefficient μ and the differential rotation V at predetermined time intervals in the inertia phase during mode switching between the high reduction ratio mode, which is the second mode, and the low reduction ratio mode, which is the first mode. In the two-speed transmission 1k of the present example, the friction coefficient μ can be calculated by the following Equation (16).

[Equation 16]

$$\mu = \left\{Tin - \frac{d\omega_{in}}{dt}\cdot\left(I_{in} - \frac{\alpha^2}{(1-\alpha)^2}\cdot I_{carrier}\right)\right\}/(Fcl \times Rcl) \quad \cdot\;\cdot\;\cdot \quad (1\;6)$$

The configuration and the effects of the other parts of the twelfth example are similar to those of the first and tenth examples.

**REFERENCE SIGNS LIST**

1, 1a to 1k Two-speed transmission
2 Drive motor
3 Differential device
4, 4a to 4c Input member
5, 5a to 5c Output member
6 Rotating member
7, 7a to 7k Friction engagement device
8, 8a to 8c Rotation transmission state switching device
9, 9a Planetary transmission mechanism
10 Fixed portion
11 Output shaft
12 Drive gear
13 Input gear
14 Output gear
15 Small diameter flange portion

16 Flange portion
17 Through hole
18 First circular ring portion
19 First cylindrical portion
20 Second circular ring portion
21 Second cylindrical portion
22 Shaft member
23 Stepped cylindrical member
24 Small diameter cylindrical portion
25 Female spline portion
26 Friction engagement portion
27 Elastic biasing member
28, 28z Cam device
29 Electric actuator
30 First friction plate
31 Second friction plate
32 Piston
33 Elastic member
34, 34z Drive cam
35 Driven cam
36 Rolling element
37 Tubular member
38 Radial bearing
39 Angular ball bearing
40 Cylindrical portion
41 Outward-facing flange portion
42 Inner ring
43 Outer ring
44 Rolling element
45 Inner ring
46 Outer ring
47 Ball
48 Drive cam surface

    48a First bottom portion
    48b First inclined surface portion
    48c First flat surface portion
    48d Second inclined surface portion
    48e Second bottom portion
    48f Third inclined surface portion
    48g Second flat surface portion
    48h Fourth inclined surface portion

49 Wheel teeth
50 Pin portion
51 Female spline portion
52 Male spline portion
53 Rectangular hole
54a, 54b Support plate portion
55 Support hole
56 Support recessed portion
57 Thrust bearing
58 Pressing member
59a, 59b Raceway ring
60 Rolling element
61 Preload applying means
62 Base portion
63 Partial cylindrical portion

64 Support shaft

65 Roller

66 Shift motor

67 Reducer

68 Worm

69a, 69b Support bearing

70 Return spring

71 First member

72 Second member

73 Mode selection member

74 Engaging recessed portion

75 Protruding portion

76 Uneven portion

77 Outer diameter side uneven engaging portion

78 Inner diameter side uneven engaging portion

79 Inner diameter side uneven engaging portion

80 Base portion

81 Cylindrical portion

82 First retaining recessed portion

83 Second retaining recessed portion

84a, 84b Spring retaining portion

85a, 85b Pedestal portion

86 First claw member

87 Second claw member

88 First claw biasing member

89 Second claw biasing member

90 First base portion

91 First engagement claw

92 Annular protruding portion

93 Second base portion

94 Second engagement claw

95 Base portion

96 Plate-side engagement hole

97 Protrusion

98 Uneven portion

99 Cover body

100 Retaining ring

101, 101a Sun gear

102, 102a Ring gear

103, 103a Carrier

104, 104a, 104b Planetary gear

105 First friction engagement device

106 Second friction engagement device

107 First driven cam

108 Second driven cam

**Claims**

1. A two-speed transmission, comprising:

a planetary transmission mechanism; an input member; an output member; a drive motor; a rotation transmission state switching device; and a friction engagement device;
the planetary transmission mechanism comprising: an input element connected to the input member; an output element connected to the output member and capable of rotating relative to the input element; and a rotating element capable of rotating relative to the input element and the output element;
the planetary transmission mechanism including: a sun element; a ring element supported around the sun element to be capable of rotating relative to the sun element; a carrier element supported to be capable of rotating relative to the sun element and the ring element; and a plurality of planetary elements engaged with the sun element and the ring element to be capable of transmitting torque and being rotatably supported by the carrier element;

the input element configured by one of the sun element, the ring element, and the carrier element;

the output element configured by one of the sun element, the ring element, and the carrier element, that is an element other than that of the input element;

the rotating element configured by a remaining element of the sun element, the ring element, and the carrier element, excluding those of the input element and the output element;

the drive motor rotating and driving the input member directly or through a reducer;

the rotation transmission state switching device arranged between the rotating element and a fixed portion that does not rotate even during use, and switching between a free mode in which the rotating element is capable of rotating relative to the fixed portion and a locked mode in which the rotating element is not capable of rotating relative to the fixed portion;

the friction engagement device having at least one first friction plate and at least one second friction plate supported to allow relative displacement in an axial direction, and arranged between any two elements of the sun element, the ring element, and the carrier element, and switching to a connected mode in which the any two elements rotate integrally by pressing the first friction plate and the second friction plate against each other, and switching to a disconnected mode in which the any two elements rotate relative to each other by releasing a force pressing the first friction plate and the second friction plate against each other;

the two-speed transmission equipped with: a first mode in which the rotation transmission state switching device is in the free mode and the friction engagement device is in the connected mode; and a second mode in which the rotation transmission state switching device is in the locked mode and the friction engagement device is in the disconnected mode; and

the two-speed transmission having a learning function that, by performing mode switching between the first mode and the second mode on a condition that a predetermined learning start condition is satisfied, and calculating a friction coefficient between the first friction plate and the second friction plate based on output torque of the drive motor and angular acceleration of an output shaft of the drive motor in an inertia phase during the mode switching, obtains a $\mu$-V characteristic that is a relationship between the friction coefficient and a differential rotation that is a difference in rotational speeds of the any two elements.

2. The two-speed transmission according to claim 1, wherein
when executing the learning function, rotational speed of the output shaft of the drive motor is kept constant, and after mode switching between the first mode and the second mode is started, it is determined that the inertia phase has started on a condition that an amount of change per unit time of the differential rotation exceeds a predetermined threshold value.

3. The two-speed transmission according to claim 1 or 2, comprising
a control function that controls output torque of the drive motor and magnitude of the force pressing the first friction plate and the second friction plate against each other based on the $\mu$-V characteristic obtained by the learning function when switching between the first mode and the second mode.

4. The two-speed transmission according to any one of claims 1 to 3; wherein
the friction engagement device comprises:

an elastic biasing member that elastically biases the first friction plate and the second friction plate in a direction so as to be pressed against each other;
a cam device having a drive cam and a driven cam supported to be capable of rotating relative to the drive cam and capable of relative displacement in the axial direction, the cam device pressing the elastic biasing member in a direction to release the force pressing the first friction plate and the second friction plate against each other by relatively displacing the driven cam in a direction to increase a distance in the axial direction between the drive cam and the driven cam as the drive cam rotates; and
an electric actuator having a shift motor and a shift reducer, the electric actuator rotating and driving the drive cam by the shift motor through the shift reducer.

5. The two-speed transmission according to claim 4, wherein
the friction engagement device includes a return spring that elastically biases the first friction plate and the second friction plate in directions away from each other.

6. The two-speed transmission according to any one of claims 1 to 5, wherein
the rotation transmission state switching device has a one-way clutch mode in which rotation of the rotating element relative to the fixed portion is allowed only in a predetermined direction, and rotation of the rotating element relative to the fixed portion in a direction opposite to the predetermined direction is prevented.

7. The two-speed transmission according to claim 6, comprising
a function of setting the rotation transmission state switching device to the one-way clutch mode while the friction engagement device is being switched from the disconnected mode to the connected mode and/or while the friction engagement device is being switched from the connected mode to the disconnected mode.

8. A method for learning a μ-V characteristic of a two-speed transmission,
the two-speed transmission, comprising:

a planetary transmission mechanism; an input member; an output member; a drive motor; a rotation transmission state switching device; and a friction engagement device;
the planetary transmission mechanism comprising: an input element connected to the input member; an output element connected to the output member and capable of rotating relative to the input element; and a rotating element capable of rotating relative to the input element and the output element;
the planetary transmission mechanism including: a sun element; a ring element supported around the sun element to be capable of rotating relative to the sun element; a carrier element supported to be capable of rotating relative to the sun element and the ring element; and a plurality of planetary elements engaged with the sun element and the ring element to be capable of transmitting torque and being rotatably supported by the carrier element;
the input element configured by one of the sun element, the ring element, and the carrier element;
the output element configured by one of the sun element, the ring element, and the carrier element, that is an element other than that of the input element;
the rotating element configured by a remaining element of the sun element, the ring element, and the carrier element, excluding those of the input element and the output element;
the drive motor rotating and driving the input member directly or through a reducer;
the rotation transmission state switching device arranged between the rotating element and a fixed portion that does not rotate even during use, and switches between a free mode in which the rotating element is capable of rotating relative to the fixed portion and a locked mode in which the rotating element is not capable of rotating relative to the fixed portion;
the friction engagement device having at least one first friction plate and at least one second friction plate supported to allow relative displacement in an axial direction, and arranged between any two elements of the sun element, the ring element, and the carrier element, and switching to a connected mode in which the any two elements rotate integrally by pressing the first friction plate and the second friction plate against each other, and switching to a disconnected mode in which the any two elements rotate relative to each other by releasing a force pressing the first friction plate and the second friction plate against each other; and
the two-speed transmission equipped with: a first mode in which the rotation transmission state switching device is in the free mode and the friction engagement device is in the connected mode, and a second mode in which the rotation transmission state switching device is in the locked mode and the friction engagement device is in the disconnected mode;
the method comprising a step of:
performing mode switching between the first mode and the second mode on a condition that a predetermined learning start condition is satisfied, calculating a friction coefficient between the first friction plate and the second friction plate based on output torque of the drive motor and angular acceleration of an output shaft of the drive motor in an inertia phase during the mode switching, obtaining a μ-V characteristic that is a relationship between the friction coefficient and a differential rotation that is a difference in the rotational speed of the any two elements.

9. A transmission control method for a two-speed transmission;
the two-speed transmission comprising:

an input member; an output member; a planetary transmission mechanism; a drive motor; a rotation transmission state switching device; and a friction engagement device;
the planetary transmission mechanism comprising: an input element connected to the input member; an output element connected to the output member and capable of rotating relative to the input element; and a rotating element capable of rotating relative to the input element and the output element;

the planetary transmission mechanism including: a sun element; a ring element supported around the sun element to be capable of rotating relative to the sun element; a carrier element supported to be capable of rotating relative to the sun element and the ring element; and a plurality of planetary elements engaged with the sun element and the ring element to be capable of transmitting torque and being rotatably supported by the carrier element;

the input element configured by one of the sun element, the ring element, and the carrier element;

the output element configured by one of the sun element, the ring element, and the carrier element, that is an element other than that of the input element;

the rotating element configured by a remaining element of the sun element, the ring element, and the carrier element, excluding those of the input element and the output element;

the drive motor rotating and driving the input member directly or through a reducer;

the rotation transmission state switching device arranged between the rotating element and a fixed portion that does not rotate even during use, and switches between a free mode in which the rotating element is capable of rotating relative to the fixed portion and a locked mode in which the rotating element is not capable of rotating relative to the fixed portion;

the friction engagement device having at least one first friction plate and at least one second friction plate supported to allow relative displacement in an axial direction, and is arranged between any two elements of the sun element, the ring element, and the carrier element, and switching to a connected mode in which the any two elements rotate integrally by pressing the first friction plate and the second friction plate against each other, and switching to a disconnected mode in which the any two elements rotate relative to each other by releasing a force pressing the first friction plate and the second friction plate against each other;

the two-speed transmission equipped with: a first mode in which the rotation transmission state switching device is in the free mode and the friction engagement device is in the connected mode, and a second mode in which the rotation transmission state switching device is in the locked mode and the friction engagement device is in the disconnected mode; and

the transmission control method comprising:

a learning step of obtaining the $\mu$-V characteristic by the $\mu$-V characteristic learning method according to claim 8; and

a step of controlling output torque of the drive motor and magnitude of the force pressing the first friction plate and the second friction plate against each other based on the $\mu$-V characteristic obtained in the learning step when switching between the first mode and the second mode.

# FIG. 1

OTHER SIDE IN THE AXIAL DIRECTION

ONE SIDE IN THE AXIAL DIRECTION

# FIG. 2A

# FIG. 2B

FIG. 3

FIG. 4

OTHER SIDE IN THE AXIAL DIRECTION

ONE SIDE IN THE AXIAL DIRECTION

FIG. 5

# FIG. 6

EP 4 560 162 A1

FIG. 7

43

# FIG. 8

FIG. 9

FIG. 10

FIG. 11

FIG. 12

FIG. 13A

FIG. 13B

FIG. 14A   FIG. 14B   FIG. 14C   FIG. 14D

# FIG. 15

FIG. 16

# FIG. 17

OTHER SIDE IN THE
CIRCUMFERENTIAL
DIRECTION

ONE SIDE IN THE
CIRCUMFERENTIAL
DIRECTION

FIG. 18

OTHER SIDE IN THE
CIRCUMFERENTIAL
DIRECTION

ONE SIDE IN THE
CIRCUMFERENTIAL
DIRECTION

## FIG. 19A

## FIG. 19B

## FIG. 19C

EP 4 560 162 A1

FIG. 20

A timing chart comparing the fastening force of the electric friction engagement device and the mode of the rotation transmission state switching device across the operating modes:

HIGH REDUCTION RATIO MODE (SECOND MODE) | REDUCTION RATIO SWITCHING MODE (THIRD MODE) | LOW REDUCTION RATIO MODE (FIRST MODE) | NEUTRAL MODE (FOURTH MODE) | β | PARKING LOCKED MODE (FIFTH MODE) | HIGH REDUCTION RATIO MODE (SECOND MODE)

FASTENING FORCE OF ELECTRIC FRICTION ENGAGEMENT DEVICE: CONNECTED MODE, DISCONNECTED MODE, DISCONNECTED MODE, CONNECTED MODE, DISCONNECTED MODE

MODE OF ROTATION TRANSMISSION STATE SWITCHING DEVICE: LOCKED MODE, ONE-WAY CLUTCH MODE, FREE MODE, ONE-WAY CLUTCH MODE, LOCKED MODE

EP 4 560 162 A1

## FIG. 21A

FIG. 21A graph: X-axis "ROTATION ANGLE θ [deg] OF DRIVE CAM 34" (0, 5, θp, 10, 15, θf, 20, 25, 30); left Y-axis "OUTPUT TORQUE τ OF SHIFT MOTOR 66"; right Y-axis "CURRENT VALUE A OF SHIFT MOTOR 66" with A_peak. Top regions: α "LOW REDUCTION RATIO MODE (CONNECTED STATE)", β "REDUCTION RATIO SWITCHING MODE", γ "HIGH REDUCTION RATIO MODE (DISCONNECTED STATE)".

## FIG. 21B

FIG. 21B graph: X-axis "ROTATION ANGLE θ [deg] OF DRIVE CAM 34" (0, θp, 5, 10, θf, 15, 20, 25, 30); left Y-axis "OUTPUT TORQUE τ OF SHIFT MOTOR 66"; right Y-axis "CURRENT VALUE A OF SHIFT MOTOR 66" with A_peak. Top regions: α "LOW REDUCTION RATIO MODE (CONNECTED STATE)", β "REDUCTION RATIO SWITCHING MODE", γ "HIGH REDUCTION RATIO MODE (DISCONNECTED STATE)".

FIG. 22

FIG. 23

FIG. 24

# FIG. 25

```
                    ( START )                  HIGH REDUCTION
                        |                      RATIO MODE
                        v              S1
          +--------------------------------+
          |  MOVE DRIVE CAM TO  θ_f         |
          +--------------------------------+
                        |              S2
          +--------------------------------+
          |  MOVE DRIVE CAM BY Δθ,          |
          |  INCREASE OUTPUT TORQUE OF      |
          |  DRIVE SOURCE BY ΔT             |
          +--------------------------------+
                        |
                        v              S3
     No      /  HAS ROTATIONAL   \
    <--------<   SPEED OF DRIVE    >
              \  SOURCE DECREASED? /
                        |
                      Yes
                        v              S4-1
          +--------------------------------+   REDUCTION RATIO
          |  DECREASE OUTPUT TORQUE OF DRIVE|   SWITCHING MODE
          |  SOUCE, PROMOTE REDUCTION OF    |
          |  ROTATIONAL SPEED OF OUTPUT SHAFT|
          +--------------------------------+
                        |              S4-2
          +--------------------------------+
          |  INCREASE OUTPUT TORQUE OF DRIVE|
          |  SOUCE UNTIL TORQUE OF OUTPUT   |
          |  MEMBER REACHES TARGET TORQUE   |
          +--------------------------------+
                        |
                        v              S4-3
     No      / ROTATIONAL SPEED OF \
    <--------<  INPUT MEMBER =      >
              \ ROTATIONAL SPEED OF /
              \ OUTPUT MEMBER?     /
                        |
                      Yes
                        v              S5
          +--------------------------------+
          |         ENSURE C_p             |
          +--------------------------------+
                        |
                        v
                    ( END )                    LOW REDUCTION
                                               RATIO MODE
```

61

EP 4 560 162 A1

FIG. 26A  ANGLE OF ROTATION θ OF DRIVE CAM /

FASTENING FORCE F AT
FRICTION ENGAGEMENT PORTION

FIG. 26B  CLUTCH CLEARANCE Cf /
PISTON CLEARANCE Cp

FIG. 26C  CLUTCH TORQUE

FIG. 26D  OUTPUT TORQUE OF
DRIVE SOURCE

FIG. 26E  ROTATIONAL SPEED Rs OF DRIVE SOURCE /
INPUT ROTATIONAL SPEED Rin /

OUTPUT ROTATIONAL SPEED Rout

FIG.26F  ROTATIONAL TORQUE OF
OUTPUT MEMBER

TORQUE PHASE   INERTIAL PHASE

62

# FIG. 27

FIG. 28

HIGH REDUCTION
RATIO MODE

LOW
REDUCTION
RATIO MODE

FASTENING
FORCE OF THE
FIRST FRICTION
ENGAGEMENT
DEVICE

CONNECTED

DISCONNECTED

CONNECTED

FASTENING
FORCE OF THE
FIRST FRICTION
ENGAGEMENT
DEVICE

DISCONNECTED

# FIG. 29

HIGH REDUCTION RATIO MODE

LOW REDUCTION RATIO MODE

NEUTRAL MODE

PARKING LOCKED MODE

HIGH REDUCTION RATIO MODE

FASTENING FORCE OF FRICTION ENGAGEMENT DEVICE

CONNECTED

CONNECTED

DISCONNECTED

DISCONNECTED

DISCONNECTED

MODE OF ROTATION TRANSMISSION STATE SWITCHING DEVICE

LOCKED MODE

FREE MODE

LOCKED MODE

EP 4 560 162 A1

FIG. 30

FIG. 31

FIG. 32

FIG. 33

FIG. 34

# FIG. 35

FIG. 36

FIG. 37

FIG. 38

FIG. 39

# FIG. 40

FIG. 41

FIG. 42

FRICTION COEFFICIENT μ

DIFFERENTIAL ROTATION V

## INTERNATIONAL SEARCH REPORT

| International application No. |
|---|
| **PCT/JP2023/024671** |

| A. | CLASSIFICATION OF SUBJECT MATTER |
|---|---|

*F16D 48/06*(2006.01)i; *F16H 59/14*(2006.01)i; *F16H 59/42*(2006.01)i; *F16H 61/04*(2006.01)i
FI:   F16D48/06 102; F16H61/04; F16H59/42; F16H59/14

According to International Patent Classification (IPC) or to both national classification and IPC

| B. | FIELDS SEARCHED |
|---|---|

Minimum documentation searched (classification system followed by classification symbols)

F16D48/06; F16H59/14; F16H59/42; F16H61/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2016-125648 A (ISUZU MOTORS LTD.) 11 July 2016 (2016-07-11)<br>entire text, all drawings | 1-9 |
| A | JP 2020-085073 A (ISUZU MOTORS LTD.) 04 June 2020 (2020-06-04)<br>entire text, all drawings | 1-9 |
| A | JP 05-116549 A (AISIN AW CO., LTD.) 14 May 1993 (1993-05-14)<br>entire text, all drawings | 1-9 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/024671**

| Patent document cited in search report | | | Publication date (day/month/year) | Patent family member(s) | Publication date (day/month/year) |
|---|---|---|---|---|---|
| JP | 2016-125648 | A | 11 July 2016 | (Family: none) | |
| JP | 2020-085073 | A | 04 June 2020 | (Family: none) | |
| JP | 05-116549 | A | 14 May 1993 | (Family: none) | |

Form PCT/ISA/210 (patent family annex) (January 2015)

**REFERENCES CITED IN THE DESCRIPTION**

**Patent documents cited in the description**

- JP H05116549 A